(19) Europäisches Patentamt
European Patent Office
Office européen des brevets

(11) EP 0 926 197 A1

(12) EUROPEAN PATENT APPLICATION
published in accordance with Art. 158(3) EPC

(43) Date of publication:
30.06.1999 Bulletin 1999/26

(21) Application number: 98929843.5

(22) Date of filing: 06.07.1998

(51) Int. Cl.[6]: C08L 67/02, C08J 3/20, B29B 11/08, B29C 49/06, B65D 1/02

(86) International application number:
PCT/JP98/03028

(87) International publication number:
WO 99/01508 (14.01.1999 Gazette 1999/02)

(84) Designated Contracting States:
DE FR GB IT

(30) Priority: 04.07.1997 JP 19476697
04.07.1997 JP 19476797
22.07.1997 JP 21129897
23.07.1997 JP 21117597
25.07.1997 JP 21390797
29.05.1998 JP 16602698
03.07.1998 JP 20284398

(71) Applicant:
MITSUBISHI PLASTICS INC.
Chiyoda-ku, Tokyo 100-0005 (JP)

(72) Inventors:
- NISHIHARA, Shun-ichi,
Mitsubishi Plastics, Inc.
Hiratsuka-shi, Kanagawa 254-0017 (JP)
- KANESAKI, Tateo,
Mitsubishi Plastics, Inc.
Hiratsuka-shi, Kanagawa 254-0017 (JP)
- OGISHITA, Masatoshi,
Mitsubishi Plastics, Inc.
Hiratsuka-shi, Kanagawa 254-0017 (JP)
- HATA, Masanori,
Mitsubishi Plastics, Inc.
Hiratsuka-shi, Kanagawa 254-0017 (JP)

(74) Representative:
Stalla-Bourdillon, Bernard
NONY & ASSOCIES,
29, rue Cambacérès
75008 Paris (FR)

# (54) POLYESTER RESIN COMPOSITION AND BOTTLE PRODUCED FROM THE RESIN COMPOSITION

(57) The present invention relates to a resin composition comprising polyethylene terephthalate and polyethylene naphthalate and a process for preparing the composition. The present invention relates also to a bottle produced from the composition and a process for the preparation of the bottle. The resin composition according to the present invention is prepared by melt-kneading (A) polyethylene terephthalate with (B) polyethylene naphthalate in a proportion of the ethylene naphthalate unit to a total of (A) and (B) of from 5 to 15 mole%, with a kneading extruder in a ratio of an extruder output rate to a screw rotation speed of 0.1 to 1.4kg/hr • rpm. The present composition gives a bottle superior in transparency and in resistance to heat and pressure despite that it has a transesterification of 20% or lower.

Fig. 1

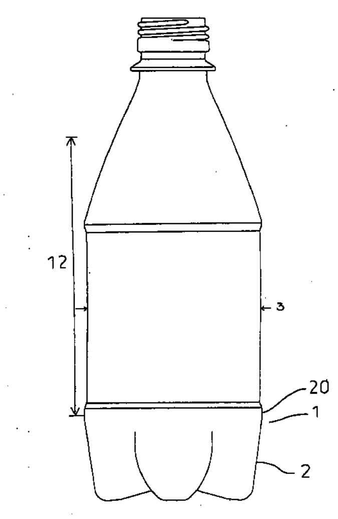


EP 0 926 197 A1

## Description

### Field of the Invention

The present invention relates to a resin composition comprising polyethylene terephthalate and polyethylene naphthalate and a process for preparing the composition. The present invention relates also to a bottle produced from the composition and a process for the preparation of the bottle.

### Description of the Prior Art

Plastic hollow containers are light and have good impact resistance and hence are widely used as containers for various kinds of liquids. Among them, hollow containers such as a bottle produced by stretch blow molding polyethylene terephthalate, i.e. bottles, are widely used as containers for beverages such as juice, soft drinks, and carbonated drinks, because they are easily produced and excellent in clarity and mechanical properties.

Recently, improved qualities such as heat resistance and gas barrier property over those of current containers are desired to allow bottle-filling under sterilization at an elevated temperature and an extended storage period of bottle contents. For example, containers are filled with carbonated beverages at a low temperature. The containers are capped and placed in a warm water bath to be subjected to sterilization or disinfection at an elevated temperature. During the sterilization, a mouth and neck part and a bottom part of the bottle are exposed to heat and pressure, which causes the container to swell or cause the bottom part to protrude due to the heat creep phenomenon. One way to solve this problem currently employed is to attach a polyethylene base cup to a round bottom part of a bottle to produce a container with a base cup. However, such a container with a base cup has a drawback of an increased production cost caused by an additional process for attaching a base cup. Also in the reclamation of such a container, separation of the base cup from the container body is required, because they are made of different materials. This makes the reclamation difficult. Another drawback is that it is difficult to secure a flow route for hot water during the sterilization of the contents.

Meanwhile, self-standing containers(bottles) having a plurality of legs at a bottom in stead of a base cup, which are capable of standing by themselves, are employed. However, the self-standing bottles are limited in use. For example, conditions of the sterilization of bottle contents should be mild. To improve heat and pressure resistance of the self-standing containers, a step of clouding-crystallizing a mouth and neck part of the bottle which part tends to change the shape in the heating sterilization is practiced, so as to make the crystallinity of the part within a predetermined range. Alternatively, heat setting of a barrel part and a bottom part is practiced. However, these treatments make the process complicated to decrease production throughput, and also are difficult to control due to their narrow control ranges. For example, although an increase in the crystallinity raises hardness of a container and thus restrains the deformation caused in the heating sterilization, too much increase makes the hardened part of the container brittle to be easily broken when a mechanical impact is applied to the container.

Thus, a container which has a property that it does not change the shape in the heating sterilization and maintains its self-standing capability is desired Hereinafter, the property is referred to as " resistance to heat and pressure".

Polyethylene naphthalate that is known to be superior to polyethylene terephthalate in heat resistance and in gas barrier property has been examined to be used for a bottle and a film to improve resistance to heat and pressure. For example, in JP Laid Open 52-45466, a bottle consisting of a polyethylene naphthalate homopolymer and having an excellent heat resistance and gas barrier property is described. However, polyethylene naphthalate is expensive, compared to polyethylene terephthalate that is mass-produced for fibers, films and molding applications, so that the polyethylene naphthalate homopolymer is not commercially used.

To take advantage of the superior heat resistance and the gas barrier property of polyethylene naphthalate, blends of polyethylene terephthalate with polyethylene naphthalate or polyethylene terephthalate naphthalate copolymers are proposed and described in, for example, JP Laid Open 50-122549, JP Laid Open 2-276877, JP Laid Open 2-274757, JP Laid Open 3-43425, RESEARCH DISCLOSURE, 29410, pp. 714-719(1988), and RESEARCH DISCLOSURE, 29484, pp.807-814(1988).

However, since compatibility between polyethylene terephthalate and polyethylene naphthalate is bad, their mixtures usually have milky white color and show bad clarity. Therefore, to obtain a transparent blend of polyethylene terephthalate and polyethylene naphthalate, it is necessary to cause transesterification reaction by melt-mixing thereby to make the molecular structure closer to that of a random copolymer. To attain sufficient clarity, a long reaction time above the melting points of the resins is required. Especially when a proportion of the ethylene naphthalate unit to the total of polyethylene terephthalate and polyethylene naphthalate is about 10 mole%, it is believed that the transesterification reaction should proceed to a considerable extent, as described in, for example, JP Laid-Open 9-52277.

The present inventors tried to find molding conditions to obtain a transparent blend by directly melt-mixing and molding polyethylene terephthalate and polyethylene naphthalate with an injection molding machine, and concluded that, in a small scale production machine, a production speed could be slower to prolong a resin residence time, and

therefore a transparent blend could be obtained; and however, in a recently developed high-speed bottle production unit with an output rate exceeding 300kg per hour, a transparent molded article could not be obtained because of the limited reaction time. Also, in a conventional process of melt-mixing polyethylene terephthalate with polyethylene naphthalate with a kneading extruder, a transparent molded article was difficult to obtain in a high-speed production unit due to the limited reaction time. Prolonging a reaction time or raising a molding temperature to enhance the reaction causes degradation of the resin or formation of thermal decomposition products such as acetaldehyde, which is not desirable especially in the beverage bottle application where preservation of tastes and aroma is important.

Thus the first object of the present invention is to provide a resin composition which makes it possible to produce a transparent bottle made from a blend of polyethylene terephthalate with polyethylene naphthalate even in high-speed bottle production facility, and a process of the resin composition, by solving the above-mentioned problems.

The second object of the present invention is to provide the resin composition described in the above paragraph, wherein a heat resistance is improved.

The third object of the present invention is to provide a bottle preform to be used to produce a polyester bottle having a high resistance to heat and pressure, and a process for preparing the preform.

The fourth object of the present invention is to provide a blended polyester bottle having a low content of acetaldehyde, one of thermal decomposition products.

The fifth object of the present invention is to provide a self-standing bottle which shows a high resistance to heat and pressure and allows easy reclamation without being provided with a base cup or being subjected to crystallization treatment.

Further, the sixth object of the present invention is to provide a process for preparing the above-mentioned self-standing bottle.

The seventh object of the present invention is to provide a process for preparing a self-standing bottle superior in moldability and a resistance at dropping.

## Disclosure of the Invention

The present invention relates to a process for preparing a polyester resin composition, characterized by melt-kneading (A) polyethylene terephthalate with (B) polyethylene naphthalate in a proportion of the ethylene naphthalate unit to a total of (A) and (B) of from 5 to 15 mole% with a kneading extruder in a ratio of an extruder output rate to a screw rotation speed of 0.1 to 1.4kg/hr • rpm.

The present invention also relates to a polyester resin composition comprising (A) polyethylene terephthalate and (B) polyethylene naphthalate, characterized in that a proportion of the ethylene naphthalate unit to a total of (A) and (B) is from 5 to 15 mole%, and that a transesterification ratio is 20% or less, or a cold crystallizing temperature, determined by differential scanning calorimetry, is 140°C or higher, and also relates to resin pellets comprising the composition and a bottle preform made from the composition.

Further, the present invention relates to a polyester resin composition prepared by melt-kneading (A) polyethylene terephthalate and (B) polyethylene naphthalate, characterized in that

a. a proportion of the ethylene naphthalate unit to a total of (A) and (B) is from 5 to 15 mole%,
b. a transesterification ratio is 20% or less, and
c. a content of the diethylene glycol ester unit in (A) polyethylene terephthalate is 1.5 mole% or less based on (A).

As one embodiment of the present bottles, a polyester resin bottle is provided which is characterized in that the bottle comprises (A) polyethylene terephthalate and (B) polyethylene naphthalate in a proportion of the ethylene naphthalate unit to a total of (A) and (B) of from 5 to 15 mole%, that a haze at a barrel part of said bottle is 3% or less, and that a content of acetaldehyde is 20ppm or less.

Another embodiment of the present bottle is a polyester self-standing bottle, characterized in that the bottom part of said bottle has a plurality of leg parts extending below from a hemispherically curved bottom face with said leg parts being disposed at an approximately regular interval along the circumference of the bottom face, and that said polyester resin bottle comprises a polyester resin composition comprising (A) polyethylene terephthalate and (B) polyethylene naphthalate in the proportion of the ethylene naphthalate unit to a total of (A) and (B) of from 5 to 15 mole%, and having a transesterification ratio of 5 to 30 % and an intrinsic viscosity of 0.70 dl/g or larger.

Preferably, the afore-mentioned polyethylene naphthalate (B) comprises an ester component or components other than the ethylene naphthalate component in a proportion of 15mole% or less, more preferably 10% or less, and most preferably 8 mole% or less.

Also, (B) polyethylene naphthalate is preferably polyethylene 2,6-naphthalene dicarboxylate. It is especially preferred that (B) polyethylene naphthalate is a polyethylene terephthalate naphthalate copolymer comprising 8 mole% of an ethylene terephthalate component.

The present invention relates to a process for preparing a self-standing bottle, comprising a step of biaxial-stretch blow molding a preform in a circumferential stretch ratio of 3.7 to 4.3 and a longitudinal stretch ratio of 2.7 to 3.3, wherein said preform comprises a polyester resin composition comprising (A) polyethylene terephthalate and (B) polyethylene naphthalate in a proportion of the ethylene naphthalate unit to a total of (A) and (B) of from 5 to 15 mole%, and having an intrinsic viscosity of 0.70 dl/g or larger.

Further, the present invention provides a process for preparing a bottle superior in moldability and in resistance at dropping, characterized in that use is made of a resin composition prepared by steps of

(1) melt-mixing polyethylene terephthalate and polyethylene naphthalate in a proportion of the ethylene naphthalate component to a total of the polyethylene terephthalate and the polyethylene naphthalate of 20 to 50 mole%, and
(2) melt-mixing the product of step (1) with an additional amount of polyethylene terephthalate so as to attain a proportion of the ethylene naphthalate component of from 5 to 15 mole%.

The present resin composition prepared by the process of the invention provides a bottle with excellent clarity even in a low transesterification ratio with which clarity could not be attained previously. This fact allows providing the present bottle which shows reduced resin degradation, and has an excellent resistance to heat and pressure and a reduced amount of thermal decomposition products. Also, a cycle time is decreased and, therefore, bottle production in high-speed production facility is possible.

Further, the present invention provides a process for preparing the resin composition as well as a bottle therefrom that is improved over the above-mentioned composition in a resistance to heat and pressure, in a moldability and in a resistance at dropping.

**Brief Description of the Drawing**

Fig 1 is a front view of an example of the self-standing bottle of the present invention. Fig.2 is an enlarged sectional view of the bottom part described in Fig.1. Fig. 3 is a bottom plan view of an example of the self-standing bottle of the present invention. Fig. 4 is a cross sectional view of an example of the preform.

**Description of the Preferred Embodiments**

Polyester Resin Composition

The present resin composition is characterized in that it comprises (A) polyethylene terephthalate and (B) polyethylene naphthalate in a proportion of the ethylene naphthalate unit to a total of (A) and (B) of from 5 to 15 mole%, and has a transesterification ratio of 20% or less, or a cold crystallizing temperature, determined by differential scanning calorimetry, of 140°C or higher.

Polyethylene terephthalate used in the invention is substantially linear and is composed mainly of units derived from terephthalic acid or ester derivatives thereof and ethylene glycol or ester derivatives thereof. The polyethylene terephthalate may comprise units derived from other dicarboxylic acid and/or other dihydroxy compounds in a concentration of 10mole% or less. Dicarboxylic acids other than terephthalic acid include aromatic dicarboxylic acids such as phthahlic acid, isophthahlic acid, naphthalenedicarboxylic acid, diphenylene dicarboxylic acid, and diphenoxyethanedicarboxylic acid; aliphatic carboxyl acids such as adipic acid, sebacic acid, azelaic acid, decanedicarboxylic acid; alicyclic dicarboxylic acids such as cyclohexanedicarboxylic acid; and ester derivatives thereof.

Dihydroxy compounds other than ethylene glycol include aliphatic glycols such as trimethylene glycol, propylene glycol, tetramethylene glycol, neopntyl glycol, hexamethylene glycol, dodecamethylene glycol, diethylene glycol, triethylene glycol, and tetraethylene glycol; alicyclic glycols such as cyclohexnedimethanol; aromatic diols such as bisphenols, hydroquinone, and 2,2-bis(4-β-hydroxyethoxyphenyl) propane; and ester derivatives thereof.

Polyethylene terephthalate used in the present invention preferably has an intrinsic viscosity [η ] (determined at 30°C in a 1:1 volume blend of phenol and tetrachloroethane )of 0.6 to 1.2 (dl/g), more preferably of 0.7 to 0.9 (dl/g).

Polyethylene naphthalate used in the present invention is composed mainly of ethylene naphthalate units derived from naphthalenedicarboxylic acid and ethylene glycol. Naphthalenedicarboxylic acids include 2,6- naphthalenedicarboxylic acid, 2,7- naphthalenedicarboxylic acid, 2,5- naphthalenedicarboxylic acid, and 1,4-naphthalenedicarboxylic acid, among which 2,6- naphthalenedicarboxylic acid is preferred.

The afore-mentioned polyethylene naphthalate may comprise ester units derived from other dicarboxylic acids than naphthalenedicarboxylic acid and/or other dihydroxy compounds than ethylene glycol in a concentration of 15

mole% or less, preferably 10 mole% or less, more preferably 8 mole% or less. The other dicarboxylic acids include aromatic dicarboxylic acids such as terephthalic acid, isophthahlic acid, diphenyl dicarboxylic acid, and diphenoxyethanedicarboxylic acid as well as ester derivatives thereof. The other dihydroxy compounds include aliphatic glycols such as trimethylene glycol, propylene glycol, tetramethylene glycol, neopntyl glycol, hexamethylene glycol, dodecamethylene glycol, diethylene glycol, triethylene glycol, and tetraethylene glycol; alicyclic glycols such as cyclohexnedimethanol; aromatic diols such as bisphenols, hydroquinone, and 2,2-bis(4-β-hydroxyethoxyphenyl) propane; and ester derivatives thereof.

The afore-mentioned other ester unit is preferably incorporated in a form of a naphthalate coplyester polymer. Particularly, a copolyester polymer with ethylene terephthalate is preferred. This is because such a coplyester polymer has a melting point closer to that of polyethylene terephthalate than a polyethylene naphthalate homopolymer and, therefore, is easily melt-kneaded with polyethylene terephthalate. A content of the other ester unit in the copolyester is 15 mole% or less, preferably 10 mole% or less. Particularly preferred is a polyethylene terephthalate - ethylene 2,6-dinaphthalate copolymer comprising 8 mole% of an ethylene naphthalate unit.

Polyethylene naphthalate used in the present invention preferably has an intrinsic viscosity [η] (determined at 30°C in a 1:1 volume blend of phenol and 1,1,2,2-tetrachloroethane )of 0.4 to 1.0 dl/g, more preferably of 0.4 to 0.8 dl/g.

In the present invention, the transesterification ratio means ester interchange between polyethylene terephthalate and polyethylene naphthalate, for which a determination method will be described below. The transesterification ratio of the present resin composition is 20% or less. Even a composition with a transesterification ratio above 20% may provide a transparent bottle, if the composition has a cold crystallizing temperature of 140°C or higher. However, the transesterification is preferably 20% or less, more preferably 18% or less, from the standpoint of improving the mass-productivity and preventing the degradation of the resin.

In the present invention, the cold crystallizing temperature is a crystallizing peak temperature in a calorimetric curve obtained with a differential scanning calorimeter (DSC220, ex SEIKO Electronics Co.) at a temperature elevation rate of 10°C/min. The cold crystallizing temperature of the present polyester resin composition is 140°C or higher, preferably 140 to 160°C, more preferably 150 to 160°C. If the cold crystallising temperature is lower than 140°C, clarity of the obtained bottle is bad, while it is practically difficult to obtain a resin composition having that above 160°C.

In the present invention, the resin composition having a transesterification ratio of 20% or less and a cold crystallizing temperature of 140°C or higher is preferred. Such a resin composition not only provides transparent bottles suitable for beverages but also has a mass-productivity adaptive to high-speed production. The resin composition having such properties could not be obtained by conventional methods of blending polyethylene terephthalate with polyethylene naphthalate. Especially, it is one of the characteristics of the present resin composition that even when the composition has a transesterification ratio of 20% or less, it provides a transparent bottle.

<u>Polyester Resin Compositions Having Improved Resistance to Heat and Pressure</u>

Incidentally, further improvement is desired in resistance to heat and pressure of a mouth and neck part of a bottle, since heat and pressure are concentrated on the mouth and neck part in a hot filling and sterilizing step. To improve heat resistance, a method where a mouth and neck part is crystallized is commonly used in polyethylene terephthalate biaxially stretched bottles, but is time consuming and leads to decrease in throughput. Another method is to increase a glass transition temperature of a raw material resin. In this method, a mouth and neck part of a bottle is not stretched, so that the resistance to heat and pressure of this part is mainly determined by the glass transition temperature (Tg) of the raw material resin.

To increase Tg, one may blend a larger amount of polyethylene naphthalate which has a higher Tg than polyethylene terephthalate. However, polyethylene naphthalate is expensive. In addition, if the amount of polyethylene naphthalate exceeds 20 mole%, the crystallinity degreases to become unsuitable to biaxial-stretch blow molding. Accordingly, the solution by blending a larger amount of polyethylene naphthalate has the limitation.

The present inventors have focused their consideration on a content of a diethylene glycol ester unit in polyethylene terephthalate as a factor affecting a Tg besides the aforesaid blending ratio. The unit is derived from a reaction of terephthalic acid or ester derivatives thereof with diethylene glycol or derivatives thereof. The present inventors have examined a relationship between the content of the unit and a Tg of the resin to have found that a resin composition having a high Tg and an excellent resistance to heat deformation can be obtained by the use of a resin having a content of the unit at a certain level or below.

That is, the present invention is a polyester resin composition prepared by melt-kneading (A) polyethylene terephthalate and (B) polyethylene naphthalate, characterized in that

a. a proportion of the ethylene naphthalate unit to a total of (A) and (B) is from 5 to 15 mole%,
b. a transesterification ratio is 20% or less, and
c. a content of the diethylene glycol ester unit in (A) polyethylene terephthalate is 1.5 mole% or less based on (A).

Further, it is preferred that the content of the diethylene glycol ester unit in the polyester resin composition is 1.5 mole% or less based on the total of (A) and (B).

In the aforesaid resin composition, it is preferred that polyethylene terephthalate does not comprise units derived from any other dicarboxylic acids and/or any other dihydroxy compounds.

In addition, the content of diethylene glycol ester unit in the polyethylene terephthalate used in the invention should not exceed a certain level. The unit is formed in reactions of diethylene glycol, which is a bi-product in the production of polyethylene terephthalate, with terephthalic acid or derivatives thereof, and is considered to have the structure represented by the formula (1), i.e. 2-ethyleneoxyethylene terephthalate residue. The present inventors have examined a relationship between a content of the unit and a Tg of a resin on various polyethylene terephthalate resins. As a result, the present inventors have succeeded in realizing a higher Tg of a raw material polyester resin-blend composition by using polyethylene terephthalate having a content of the unit of 1.5 mole% or less, preferably 1.4 mole% or less, without increasing the amount of polyethylene naphthalate to be blended, and thereby further improving the resistance to heat and pressure of a bottle.

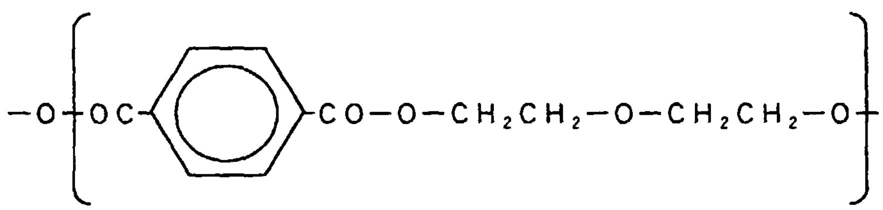

(1)

In the preparation of the present composition in the present invention, the content of the diethylene glycol ester unit is determined on every lot of polyethylene terephthalate and those having the content of 1.5 mole% or less are used. The content of the unit can be determined by, e.g., NMR spectrometry on proton peaks corresponding to the diethylene group of aromatic carboxylic acid diethylene glycol ester, which will be described in details below.

The aforesaid polyethylene terephthalate has an intrinsic viscosity [$\eta$] of 0.6 to 1.2 (dl/g), more preferably of 0.7 to 0.9 (dl/g).

As to polyethylene naphthalate used in the invention, what is described above regarding the resin composition applies here, too. Further, in the present composition, the content of the diethylene glycol ester unit in a final product resin composition is preferably 1.5 mole% or less, and accordingly the content of the diethylene glycol ester unit in the polyethylene naphthalate is preferably at a certain level or less. The diethylene glycol ester unit in the polyethylene naphthalate is considered to have a structure of the above-mentioned formula (1) with the benzene ring being replaced by a naphthalene ring. In the copolymer with polyethylene terephthalate the structure of formula (1) may also be included. Preferably, the content of the diethylene glycol ester unit in the polyethylene terephthalate that is a base polymer of the present composition is 1.4 mole% or less, and the content of the diethylene glycol ester unit in the polyethylene naphthalate is 2.0 mole% or less.

A blend ratio of (A) polyethylene terephthalate with (B) polyethylene naphthalate is such that a proportion of the ethylene naphthalate unit to a total of (A) and (B) is from 5 to 15 mole%, preferably 7 to 13 mole%. If the content of the ethylene naphthalate unit is blow the afore-mentioned lowest limit, heat resistance and a gas barrier property of a bottle are insufficient. Meanwhile, If the content of the ethylene naphthalate unit is above the afore-mentioned upper limit, a blend resin composition loses the crystallizing property to cause problems. For example, pellets are fused and stick to each other during dehumidifying drying before secondary melt-molding, which is not desirable.

<u>Polyester Resin Pellets and Preforms</u>

The resin composition of the present invention is prepared in a form of pellets or the like. Then, the resin composition of the present invention is molded into a bottle preform by injection molding. The bottle preform is characterized in that it comprises (A) polyethylene terephthalate and (B) polyethylene naphthalate in a proportion of the ethylene naphthalate unit to a total of (A) and (B) of from 5 to 15 mole%, and has a transesterification ratio of 25% or less, or a cold crystallizing temperature, determined by differential scanning calorimetry, of 140°C or higher.

<u>Polyester Bottles</u>

One embodiment of the polyester bottle of the present invention is a polyester bottle characterized in that it

comprises (A) polyethylene terephthalate and (B) polyethylene naphthalate in a proportion of the ethylene naphthalate unit to a total of (A) and (B) of from 5 to 15 mole%, and has a haze at a barrel part of said bottle of 3% or less, and a content of acetaldehyde of 20ppm or less. The aforesaid polyester bottle preferably has a transesterification ratio of 27% or less.

The aforesaid bottle is characterized by superior clarity with a haze at a barrel part of the bottle of 3% or less. Here, a haze is a value determined according to ASTM D 1003, as will be described below.

Thermal degradation of the raw material resin can be restrained as described above, and accordingly the aforesaid polyester bottle is characterized in that it has an acetaldehyde content of 20ppm or less. Therefore, ingredients of beverages or the like contained in the bottle are not deteriorated by acetaldehyde, and the tastes and aroma are preserved very well. The acetaldehyde content herein is determined by extracting a predetermined amount of finely divided pieces from a bottle with distilled water and analyzing it by gas chromatography. The details will described later in the specification.

In the aforesaid bottle, the transesterification ratio is 27 % or less, preferably 25 % or less. Although this transesterification ratio is lower than that previously required for clarity, the resin composition has excellent clarity. A resin composition having a transesterification ratio above 27% may give a transparent bottle. However, a higher melt temperature or a longer melt time is required to attain such a high transesterification ratio, so that problems arise in mass-productivity and degradation of the resin or the like, and also the acetaldehyde content increases.

<u>Self-Standing Bottles</u>

Another embodiment of the bottle of the present invention is a plastic self-standing bottle prepared by biaxial-stretch blow molding, characterized in that the bottom part (1) of the bottle has a plurality of leg parts (2) extending below from a hemispherically curved bottom face (11) with the leg parts being disposed at an approximately regular interval along the circumference of the bottom face, and that said polyester resin bottle comprises a polyester resin composition comprising (A) polyethylene terephthalate and (B) polyethylene naphthalate in a proportion of the ethylene naphthalate unit to a total of (A) and (B) of from 5 to 15 mole%, and having a transesterification ratio of 5 to 30 % and an intrinsic viscosity of 0.70 dl/g or larger.

In the bottle, it is preferred that a mouth and neck part and a central part of the bottom face (10) of said bottle are of a substantially noncrystalline state, and have a density of 1.330 to 1.350g/$cm^3$. It is further preferred that a wall thickness in a barrel part of the bottle is 0.5mm or less or a weight per unit net internal volume of the bottle is 0.055 to 0.065g/ $cm^3$.

The intrinsic viscosity for the aforementioned bottle is measured at 30 °C with an Ubbelohde's viscometer on samples prepared by dissolving 0.5 g of the polyester resin cut from the self-standing bottle in 100 cc of a 1:1 volume blend of phenol and 1,1,2,2-tetrachloroethane. The intrinsic viscosity of the resin composition in the aforementioned self-standing bottle is 0.70 dl/g or larger, preferably 0.73 dl/g or larger. A bottle having an intrinsic viscosity below 0.70 dl/g may have an uneven bottle wall thickness, particularly a thickness of a barrel part of a bottle is often thin and feels bad when held in a hand; and also such a bottle having an uneven wall thickness has very poor resistance to heat and pressure when subjected to heat sterilization treatment.

The intrinsic viscosity usually becomes smaller than that of a raw material polyester resin composition because of thermal degradation of the resin composition caused by the heating in a cylinder and shearing heat imposed by a screw in a molding step. Therefore, to ensure that the intrinsic viscosity of the resin constituting the self-standing bottle be 0.7 dl/g or larger, a mixing ratio of (A) to (B) is preferably set so as to meet the inequality: (an intrinsic viscosity of (A) x wt% of (A) + an intrinsic viscosity of (B) x wt% of (B))/100>0.7 , preferably >0.75, provided that the intrinsic viscosity of (A) and that of (B) are in the ranges mentioned for the resin composition.

The transesterification ratio of the polyester resin composition constituting the bottle is 5 to 30 %, preferably 7 to 25 %. A resin composition having a transesterification ratio above 30 % may provide a bottle with good clarity. However, a higher melt temperature or a longer melt time is required to attain such a high transesterification ratio, so that the problems may occur in, for instance, mass-productivity and degradation of the resin; and also change in a barrel diameter of a bottle after heat sterilization treatment tends to increase.

In the aforesaid self-standing bottle, it is preferred that a mouth and neck part and a centeral part of the bottom face of said bottle are of a substantially noncrystalline state, and have a density of 1.330 to 1 .350g/$cm^3$. As used herein, the terms "substantially noncrystalline state" mean that the bottle is clear in visual observation, and no cloudy part due to crystallization can be noticed. The present bottle is characterized in that, even if the mouth and neck part and the other are of the substantially noncrystalline states, it shows less deformation in heat sterilization. Since one can save a clouding crystallization treatment which is conventionally practiced on a mouth and neck part to prevent deformation in heat sterilization, the productivity of the bottle is improved. In addition, the clarity of the mouth and neck part gives a refreshing appearance to the bottle, which is suitable for soft drinks.

Herein, the density of the mouth and neck part and the cental part of the bottom face are determined by a density gradient method, which will be described in detail later in the specification. The density is 1.330 to 1.350 g/$cm^3$, preferably 1.336 to 1.340 g/$cm^3$. If it is higher than 1.350 g/$cm^3$ , a cloudy part formed by crystallization is noticeable in visual observation.

Further, the self-standing bottle preferably has a bottle wall thickness at a barrel part of 0.5 mm or less. Here, the barrel part is a part other than the mouth and neck part and the bottom part, and is indicated by numeral 12 in Fig. 1 which shows an example of the self-standing bottle of the present invention. Especially, it is characteristic to the present bottle that, even when the wall thickness of the upper end portion (20) of the curved surface of the bottom part immediately below the barrel part in Fig. 1 is 0.5mm or less, the present bottle shows little change in shape by heat sterilization.

Further, the self-standing bottle preferably has a weight per unit net internal volume of 0.055 to 0.065g/ $cm^3$. The wall thickness of the present self-standing bottle can be thin as described above and, hence, a weight per unit net internal volume ca be small. For example, it is possible to make a bottle of 500ml in net internal volume having about 30.5g in weight.

<u>Resin Compositions and a Process for Preparing Bottles Therefrom</u>

The present resin composition may be prepared by weighing (A) polyethylene terephthalate and (B) polyethylene naphthalate individually, for instance, in a form of pellets in a proportion of (B) polyethylene naphthalate of from 5 to 15 mole%, and then melt-kneading them at a temperature of a melting point of the resin mixture or higher with a kneading extruder The kneading extruder is preferably provided with a degassing device, such as a twin-screw extruder with vents. Polyethylene terephthalate and polyethylene naphthalate are preferably dried in advance, but they can be melt-kneaded with a kneading extruder having vents without being dried. The temperature in the melt kneading is set to a temperature of the melting point of the resin mixture or higher, e.g., 290 to 330°C of a resin temperature. The resin is kneaded and extruded in a ratio of the extruder output rate to a screw rotation speed of from 0.1 to 1.4 kg/hr • rpm, preferably 0.4 to 1.2 kg/hr • rpm. If the ratio is lower than the aforementioned lower limit, a larger amount of heat is caused on the resin by a strong shear force of the extruder, which causes undesirable degradation of the resin. In addition, mass-productivity is worsened because of the decrease in the extruder throughput. On the other hand, if the ratio exceeds 1.4, the resins cannot disperse homogeneously each other and clarity of the composition is worse. If the average residence time of the resin is prolonged by decreasing the extruder throughput to improve the dispersion of the resin, problems arise, such as decrease in the mass-productivity. The resin composition obtained is usually molded into a form of pellets.

The aforementioned polyester resin composition may comprise various kinds of additives such as stabilizers against weathering, pigments and dyes as far as the objects of the present invention are not damaged.

Subsequently, the obtained pellets are heated in air at 110 to 130°C for 2 to 4 hours to crystallize at least the surface of the pellets, and dehumidified and dried at 140 to 160°C for 3 to 6 hours to lower the water content, usually, to be 50ppm or less. The dried pellets are fed to a conventional injection molding machine and melt-injection molded into preforms. The molding temperature is the melting point of the resin plus 5 to 40°C, preferably plus 10 to 20°C. If the molding temperature is lower than the melting point of the resin plus 5°C, a melt viscosity is too high to injection-mold the resin easily. If it is higher than the melting point plus 40°C, the amount of thermal decomposition products, e.g., acetaldehyde, increases which may degrade the quality of the bottle for beverages.

An injection molding machine used in the present invention is preferably provided with vents, which has a high kneading effect and is capable of removing the thermal decomposition products such as acetaldehyde by sucking them out under a reduced pressure or vacuum, but any conventional injection molding machine may be used. When the average residence time of the resin is 40 to 240 seconds, preferably 90 to 180 seconds, with an L/D of about 20 to 25,it is possible to obtain preforms having good clarity and an acetaldehyde content of 20 ppm or less.

The intrinsic viscosity becomes usually lower than that of the raw material polyester resin composition due to degradation of the resin composition caused by the heating in a cylinder and heat generated by shear force on the resin passing the screw in a molding step. Therefore, to prevent the intrinsic viscosity of the preform from becoming lower than 0.7 dl/g , it is preferred to mix (A) polyethylene terephthalate with (B) polyethylene naphthalate in the ratio already described for the self-standing bottle and take care to avoid that the cylinder temperature is too high compared with the melting point of the resin composition and that the cycle time is too large.

The cylinder temperature of an injection molding machine is preferably 290°C or lower, more preferably 280°C or lower. The molding cycle time per preform is preferably 40 seconds or shorter, more preferably 30 seconds or shorter. Most preferably, the cylinder temperature is 280°C or lower and the cycle time per preform is 30 seconds or shorter.

The preform obtained is biaxial-stretch blow molded into a self-standing bottle. As to a stretch ratio in the stretch molding, a circumferential stretch ratio is 3.7 to 4.3 and a longitudinal stretch ratio is 2.7 to 3.3. Preferably the circumferential stretch ratio is 3.9 to 4.1 and the longitudinal stretch ratio is 2.8 to 3.1. If the stretch ratios are higher than the above values, a wall of the bottle becomes so thin that the resistance to heat and pressure is worse or the bottle

bursts during the molding. On the other hand, if the stretch ratios are lower than the above values, non-stretched portions remain, for example, in a bottom part. Especially in a non-stretched in a bottom part, thermal creeping phenomenon takes place on account of a rise in pressure inside the bottle in heat sterilization, which causes the whole central part of the bottom to swell out, and hence the bottle loses self-standing capability.

In the invention, the circumferential stretch ratio and the longitudinal stretch ratio are defined by the following equations:

circumferential stretch ratio = an outer diameter of a barrel of a bottle / an outer diameter of a barrel of a preform, and

longitudinal stretch ratio = a length below a neck to a bottom of a bottle / a length below a neck to a bottom of a preform.

Herein, the outer diameter of a barrel of a preform means a diameter of the part indicated by numeral 31 in Fig.4; the length below a neck to a bottom of a preform means a length of the part indicated by numeral 33 in Fig.4; and the length below a neck to a bottom of a bottle means a length from the lowest end of a neck to a tip of a leg of a self-standing bottle.

The temperature of a preform subjected to biaxial-stretch blow molding is preferably 90 to 100°C. Such a temperature can be realized by, for example, heating the preform with an infrared-heating medium located in parallel with the longitudinal axis of the preform. If the temperature of a preform is not in the aforementioned range, it is difficult to obtain a bottle with even wall thickness, so that resistance to heat and pressure of the obtained bottles tend to be worse.

<u>Process for Preparing Bottles - II</u>

In another embodiment of the process for the preparation of the bottles according to the nvention, an improved method for preparing a bottle is provided which is superior in bottle moldability and a resistance at dropping. In a first step of the process, polyethylene terephthalate and polyethylene naphthalate are melt-mixed in a proportion of the ethylene naphthalate component to a total of them of 20 to 50 mole%. Then, the product of the first step is mixed with an additional amount of polyethylene terephthalate so as to attain a proportion of the ethylene naphthalate component of from 5 to 15 mole%. Thus, degradation of polyethylene terephthalate can be decreased by preparing the resin composition having larger content of ethylene naphthalate by the melt-mixing in the first step, and mixing with an additional amount of ethylene naphthalate. An intrinsic viscosity of polyethylene terephthalate is higher than that of polyethylene naphthalate, so that a resin composition having a higher intrinsic viscosity and a better moldability can be obtained finally. The improved moldability eliminates unevenness of the wall thickness in the molded article, thereby providing a bottle which is superior in a resistance to heat and pressure as well as gas barrier property, and resistance at dropping.

The proportion of the ethylene naphthalate component in the first step is 20 to 50 mole%, preferably 20 to 45 mole%. If the ethylene naphthalate proportion is lower than the above lower limit, the amount of the polyethylene terephthalate to be added in the second step becomes smaller, so that it becomes difficult to attain a high intrinsic viscosity. On the other hand, if the ethylene naphthalate proportion is higher than the above upper limit, phase separation may occur in the second step, resulting in poor clarity of the resin.

The melt-mixing in the first step is performed in such a way that polyethylene terephthalate and polyethylene naphthalate are weighed individually, for instance, in the form of pellets, and melt-mixed with each other at a temperature of at least the melting point of the resin mixture with a kneading extruder. The kneading extruder is preferably provided with a degassing device, e.g., a twin-screw extruder with vents. The temperature of the melt-mixing is set to a temperature of at least the melting point of the resin mixture, for example, a resin temperature at an exit of the extruder of 250 to 320°C. Preferably, the aforementioned temperature is 260 to 290°C. By the melt-kneading at such a relatively low temperature, a resin composition having higher clarity can be obtained. The extrusion conditions are as already mentioned above. The resin composition obtained has an intrinsic viscosity of 0.55 to 0.69 dl/g and is transparent. The composition is molded, for instance, into a form of pellets. Then, the pellets are dried in air at 110 to 130°C. for 2 to 4 hours to crystallize at least the surface layer and then dehumidifying-dried at 140 to 160°C for 3 to 6 hours. Thus, the water content of the pellets can be made 50 ppm or less.

In the second step, the dried pellets and an additional amount of polyethylene terephthalate are mixed so as to attain a proportion of the ethylene naphthalate component of from 5 to 15 mole%. The mixing may be carried out with various conventional means such as an injection molding machine, a blender, a mixer, and an extruder. Preferably, the mixing is conducted by feeding both of the pellets with a constant weight feeder to an injection molding machine to form a preform.

An injection molding machine used in the present invention is preferably provided with vents, which has a high

kneading effect and is capable of removing thermal decomposition products such as acetaldehyde by sucking them out under a reduced pressure or vacuum, but any conventional injection molding machine may be used. An average resin residence time and bottle moldability are the same as already described above.

## Examples

The present invention will be further explained in the following examples.

### A. Polyester Resin Compositions

#### Example A-1

Polyethylene terephthalate ( intrinsic viscosity 0.85 dl/g ) and a copolymer ( intrinsic viscosity 0.62 dl/g ), as the polyethylene naphthalate, consisting of 92 mole% of an ethylene-2,6-naphthalene dicarboxylate unit and 8 mole % of an ethylene terephthalate unit were fed at a constant weight rate in a weight ratio of 90 to 10 into a corotating twin-screw extruder TEX 65 ( ex Nihon Seikosho Co., screw diameter 65mm, L/D=42 ), and extruded into resin pellets under the mixing conditions that an extruder output rate was 250kg/hr, and a ratio of the extruder output rate to a screw rotation speed was 1.0. The pellets showed a transesterification ratio of 18% and a cold crystallizing temperature of 152.7°C. Then, the pellets thus obtained were molded into preforms of 31 g in weight with an injection molding machine P50 (ex Krupp Former Plast GmbH., 350 tons) , which were then blow molded into bottles of 500ml in net internal volume with a blow molding machine LB01E( ex Krupp Corpoplast GmbH). The obtained bottles were transparent. The temperature of the preforms immediately before the molding was about 100°C.

#### Example A-2

Resin pellets were molded under the same conditions as in Example A-1 except that the extruder output rate was 200 kg/hr. The pellets showed a transesterification ratio of 9.5%, and a cold crystallizing temperature of 155°C .Then, bottles of 500ml in net internal volume, were obtained in the same manner as in Example A-1 which were transparent.

#### Example A-3

Resin pellets having a transesterification ratio of 15%, and a cold crystallizing temperature of 154°C were obtained under the same mixing conditions as in Example A-2 except that the ratio of an extruder output rate to a screw rotation speed was 0.4. Then, transparent bottles of 500ml in net internal volume were obtained in the same manner as in Example A-2.

#### Comparison Examples A-1

Resin pellets were obtained under the same conditions as in Example A-1 except that the ratio of an extruder output rate to a screw rotation speed was 1.8. Then, bottles of 500ml in net internal volume were obtained as in Example A-1. The pellets molded under those mixing conditions showed a cold crystallizing temperature of 133°C and the bottles obtained therefrom were not transparent, but cloudy.

#### Comparison Examples A-2

Resin pellets were obtained under the same mixing conditions as in Example A-2 except that the ratio of an extruder output rate to a screw rotation speed was 1.8 and then, bottles of 500ml in net internal volume were obtained as in Example A-2. The pellets molded under those mixing conditions showed a cold crystallizing temperature of 134.2°C and the obtained bottles were not transparent, but translucent.

#### Comparison Examples A-3

Pellets of polyethylene terephthalate (intrinsic viscosity 0.85 dl/g) and pellets of a copolymer (intrinsic viscosity 0.62 dl/g ), as the polyethylene naphthalate, consisting of 92 mole% of an ethylene-2,6-naphthalene dicarboxylate unit and 8 mole % of an ethylene terephthalate unit were homogeneously mixed with each other in a weight ratio of 90 to 10 and dried at 150°C for 6 hrs. Then, the mixture was molded into preforms of 31 g in weight with an injection molding machine P50 (ex Krupp Former Plast GmbH., 350 tons), which were subsequently blow molded into bottles of 500ml in

net internal volume with a blow molding machine LB01E 50 ( ex Krupp Corpoplast GmbH). Here, the average residence time was 210 seconds, which was shorter than that conventionally required to produce transparent bottles solely with an injection molding machine, so that transparent bottles could not be obtained because of the insufficient mixing.

The results obtained above are summarized in Table 1. Comparing the Examples and the Comparative Examples in Table 1, all the bottles obtained from the resin composition according to the present invention are superior in clarity with lower haze. Also, whereas it has been considered that a resin composition fails to give a transparent bottle unless it has a significantly high transesterification ratio and that its cold crystallizing temperature cannot be 140°C or higher, the resin composition according to the present invention is characterized in that it gives a bottle with superior transparency even in a high-speed production despite that it has a transesterification ratio of 20% or lower, and also in that a cold crystallizing temperature is 140°C or more.

Table 1

| | Mixing ratio(wt%) | | Molding machine | Output (kg/hr) | Output rate/ Screw rotation speed (kg/hr·rpm) | Average residence time of the resin(sec.) | Trans-esterification ratio (%) | Cold crystallizing temperature (℃) | Intrinsic viscosity (dl/g) | Bottle haze (%) |
|---|---|---|---|---|---|---|---|---|---|---|
| | Polyethylene terephthalate | Polyethylene naphthalate | | | | | | | | |
| Example A-1 | 90 | 10 | screw kneading extruder | 250 | 1 | 66 | 18 | 152.7 | 0.746 | 0.8 |
| Example A-2 | 90 | 10 | screw kneading extruder | 200 | 1 | 92 | 9.5 | 155 | 0.754 | 0.7 |
| Example A-3 | 90 | 10 | screw kneading extruder | 200 | 0.4 | 92 | 15 | 154 | 0.744 | 0.72 |
| Comparison Example 1 | 90 | 10 | screw kneading extruder | 250 | 1.8 | 66 | 5 | 133 | 0.762 | 7.9 |
| Comparison Example 2 | 90 | 10 | screw kneading extruder | 200 | 1.8 | 92 | 5 | 134.2 | 0.766 | 4.8 |
| Comparison Example 3 | 90 | 10 | Injection molding. machine | 120 | - | 210 | 9.2 | 138 | 0.743 | 8.5 |

The intrinsic viscosity, transesterification ratio, and cold crystallizing temperature of the polyester resin composition or pellet in the above Examples and Comparison Examples, and the haze of the drawing blown bottles were

determined by the following methods.

Intrinsic Viscosity

The intrinsic Viscosity was measured at 30 °C with an Ubbelohde's viscometer on samples prepared by dissolving 0.5 g of the polyester resin in 100 cc of a mixture of phenol and 1,1,2,2-tetrachloroethane of a 1:1 volume ratio.

Transesterification Ratio

An appropriate amount of a sample was dissolved in a 1:1 volume blend of trifluoroacetic acid and chloroform, to which tetramethylsilane was added as a reference. Proton NMR spectra were taken on the solution with an FT-NMR spectrometer (ex JEOL) to obtain the integrated intensities of the proton peaks characteristic of the naphthalate-ethylene-terephthalate bond, naphthalate-ethylene-naphthalate bond, and terephthalate- ethylene-terephthalate bond, from which the abundance ratio of each bond was calculated. The conversion was calculated from the abundance ratios according to the following equation:

$$\%TE(\text{transesterification ratio})=(NET_obs)/(NET_calc) \times 100(\%)$$

(NET_obs): ratio of naphthalate-ethylene-terephthalate bond
(NEN_obs): ratio of naphthalate-ethylene-naphthalate bond
(NET_calc): 2N(1-N)
N (mole fraction of naphthalate component): (NEN_obs)+(NET_obs )/2

Cold Crystallizing Temperature

About 10mg of the resin was weighed in an Al pan and analyzed with a differential calorimeter DSC220C (ex SEIKO Electronics Co., calibrated with In) using a vacant Al pan as a reference at a temperature increase rate of 10°C/min. The crystallizing peak temperature was read from the obtained calorimetry curve.

Bottle Haze

A sample piece of 3 cm x 3cm was cut from the barrel part of the molded bottle, which was analyzed with a differential color meter Σ 80 (ex Nihon Denshoku Kogyo Co.) according to ASTM D 1003.

B. Resin Compositions Having Improved Heat Resistance

(1) The intrinsic viscosity and the diethyleneglycol ester unit content of the resins used in the Examples are as follows;

polyethylene terephthalate:

a. Example B-1 and Comparison Examples B-1 and B-2

intrinsic viscosity, 0.83 (dl/g),
diethyleneglycol ester unit, 1.3 mole%,

b. Reference Example B-1

intrinsic viscosity, 0.83 (dl/g),
diethyleneglycol ester unit, 1.7 mole%,

c. Reference Example B-2 and Comparison Example B-3

intrinsic viscosity, 0.83 (dl/g),
diethyleneglycol ester unit, 3.2 mole%,

polyethylene naphthalate: coplymer consisting of 92 mole% of an ethylene-2,6-naphthalene dicarboxylate unit and 8 mole% of an ethylene terephthalate unit,

intrinsic viscosity 0.50 (dl/g)
diethyleneglycol ester unit, 1.8 mole%

(2) Preparation of the Resin Compositions

Example B-1

The polyethylene terephthalate and the polyethylene naphthalate specified above were fed in a constant weight rate in a ratio of 85 wt% to 15 wt% (ethylene naphthalate unit, 11.4 mole %) into a corotating twin-screw extruder TEX 65 (ex. Nihon Seikosho Co., screw diameter 65mm, L/D=42 ), and molded into blend pellets under the mixing conditions that an extruder output rate was 250kg/hr, and a ratio of the extruder output rate to a screw rotation speed was 0.9.

Reference Example B-1

Blend pellets were obtained under the same melt-mixing conditions as in Example B-1 except that polyethylene terephthalate containing 1.7 mole% of a diethylene glycol ester unit was used.

Reference Example B-2

Blend pellets were obtained under the same melt-mixing conditions as in Example B-1 except that polyethylene terephthalate containing 3.2 mole% of a diethylene glycol ester unit was used.

Comparison Example B-1

Polyethylene terephthalate and polyethylene naphthalate, which were the same as those used in Example B-1, were fed at a constant weight rate in a weight ratio of 85 wt% to 15 wt% into a corotating twin-screw extruder TEX 65 (ex Nihon Seikosho Co., screw diameter 65mm, L/D=42), and molded into pellets having a transesterification ratio of 28.2% under the mixing conditions that an extruder output rate was 250kg/hr, and a ratio of the extruder output rate to a screw rotation speed was 0.09.

Comparison Example B-2

Polyethylene terephthalate and polyethylene naphthalate, which resins were the same as those used in Example B-1, were fed at a constant weight rate in a weight ratio of 70 wt% to 30 wt% (ethylene naphthalate 23.6 mole%) into a corotating twin-screw extruder model TEX 65 (ex Nihon Seikosho Co., screw diameter 65mm, L/D=42) and molded into blend pellets under the mixing conditions that an extruder output rate was 250kg/hr, and a ratio of the extruder output rate to a screw rotation speed was 0.9.

Comparison Example B-3

Polyethylene terephthalate, which was the same as that used in Reference Example B-2, was fed at a constant weight rate in a weight ratio of 70 wt% to 30 wt% ( ethylene naphthalate 23.6 mole%) into a corotating twin-screw extruder TEX 65 (ex Nihon Seikosho Co., screw diameter 65mm, L/D=42 ), and molded into blend pellets under the mixing conditions that an extruder output rate was 250kg/hr, and a ratio of extruder output rate to a screw rotation speed was 0.9.

(3) Measurement of the resin composition properties

The glass transition temperature, intrinsic viscosity, transesterification ratio, and diethylene glycol ester unit content of the pellets prepared in the aforesaid conditions were measured. The measurement methods for the intrinsic viscosity and transesterification ratio were as described above, and those for the glass transition temperature and diethylene glycol ester unit content were as will be described below.

Glass transition temperature

The glass transition temperature was determined from charts obtained at a temperature elevation rate of 10°C/min with a differential scanning calorimeter DSC220C (ex SEIKO Electronics Co.).

Diethylene glycol ester unit content

Proton NMR spectra were obtained in the same manner as in the transesterification ratio measurement. The ratio of the integrated intensity of the peak around 4.84 ppm originated from the protons in the ethylene terephthalate unit to those of the peaks around 4.20 ppm and 4.70 ppm originated from the protons in the diethylene group in the diethylene glycol ester terephthalate unit was determined, from which a diethylene glycol ester terephthalate unit content was calculated.

(4) Measurement of the heat resistance of the resin compositions

Further, the heat resistance of the resin compositions was determined on test pieces cut from a sheet of 2mm x 110mm made from each blend pellets by injection molding with an injection molding machine SH-150A(ex Sumitomo Heavy Industry Co.) at a cylinder temperature of 280°C.

Tan δ peak temperature in viscoelasticity

A 12cm-wide test piece was prepared from the sheet. With a viscoelasticity meter RDA2(ex Reometrix Co.) , a viscoelasticity was measured on the test piece under the following conditions to determine a tan δ peak temperature.

Temperature elevation rate : 2°C/min from 23°C to 130°C
Frequency: 10Hz twist

Tensile test under a constant microload

A 2mm-wide test piece was prepared from the aforesaid injection molded sheet. With a tensile test instrument with a constant microload (ex INTESCO Co.), a deformation ratio was measured.

Test piece : 2mmx2mmx50mmL
Load: 20kg/$cm^2$
Temperature program : 4°C/min from 30°C to 65°C held at 65°C
Deformation ratio : measured after 30min at 65°C

(5) Preparation and evaluation of polyester bottles

Preforms of 31 g in weight were molded from each of the aforesaid blend pellets with an injection molding machine SH-150A(ex Sumitomo Heavy Industry Co.) at a cylinder temperature of 280°C. After re-heated to 110°C, the preform was molded into a bottle of 500 ml in net internal volume with a blow molding machine LB-01E(ex Krupp Corpo Plast GmbH). The bottle was evaluated for moldability and subjected to a hot water filling test as described below.

Hot water filling test

A bottle was filled with hot water of 85°C and capped. After left for 3 minutes, the bottle was cooled by water. The internal diameter of the mouth part was measured with a micrometer and the ratio of change in the diameter, compared with the original internal diameter, was determined.

Bottle moldability

The appearance of each 5 bottles prepared under the aforesaid conditions was visually observed immediately after the blow molding. A case, where all the 5 bottles had the shape honestly conforming to the mold and stood upright, was rated as " ○ " ; a case where even one of the bottles leaned was rated as "△"; and a case, where bottle failed apparently to honestly reproduce the shape of the mold was rated as " X ".
The results of the above evaluations are as shown in Table 2.

Table 2

| Example | Raw material IV*1 (dl/g) Polyethylene terephthalate | Raw material IV*1 (dl/g) Polyethylene naphthalate | DEGE*2 content in the raw material (mol%) Polyethylene terephthalate | DEGE*2 content in the raw material (mol%) Polyethylene naphthalate | Mixing ratio (wt%) Polyethylene terephthalate/ Polyethylene naphthalate | Blended pellet properties: IV (dl/g) | Blended pellet properties: DEGE content (mol%) | Blended pellet properties: Trans-esterification ratio (%) | Heat resistance: Tg (℃) | Heat resistance: tan δ temperature (℃) | Heat resistance: Deformation rate in a constant microload tensile test (%) | Heat resistance: Mouth deformation ratio of a filled bottle at 85℃ (%) | Bottle moldability |
|---|---|---|---|---|---|---|---|---|---|---|---|---|---|
| Ex. B-1 | 0.83 | 0.5 | 1.3 | 1.8 | 85/15 | 0.72 | 1.4 | 7.3 | 85.2 | 97.8 | 0.72 | -0.82 | ○ |
| Ref.Ex.B-1 | 0.83 | 0.5 | 1.7 | 1.8 | 85/15 | 0.72 | 1.9 | 10.1 | 83.7 | 96.1 | 1.02 | -1.68 | ○ |
| Ref.Ex.B-2 | 0.83 | 0.5 | 3.2 | 1.8 | 85/15 | 0.72 | 2.9 | 11.2 | 81.5 | 94.3 | 1.45 | -2.50 | ○ |
| Comp.Ex.B-1 | 0.83 | 0.5 | 1.3 | 1.8 | 85/15 | 0.72 | 1.4 | 28.2 | 85.0 | 97.7 | 0.70 | -0.80 | × |
| Comp.Ex.B-2 | 0.83 | 0.5 | 1.3 | 1.8 | 70/30 | 0.68 | 1.5 | 12.5 | 88.7 | 99.4 | 0.62 | -0.60 | × |
| Comp.Ex.B-3 | 0.83 | 0.5 | 3.2 | 1.8 | 70/30 | 0.68 | 2.9 | 12.0 | 85.0 | 97.5 | 0.73 | -0.85 | × |

＊1 : Intrinsic viscosity
＊2 : Diethylene glycol ester unit

Compared to Reference Examples B-1 and B-2, the resin composition of Example B-1 has higher Tg and tan δ peak temperatures and has a less deformation ratio in the constant-microload tensile test and a less mouth size

change ratio in the 85°C water-filled bottle, and thus is superior in heat resistance. In Reference Example B-1, the same resin was used as that in Example B-1 and, however, the moldability is bad, because the resin was kneaded till the transesterification ratio became higher, resulting in degradation of the crystallinity of the resin. On the other hand, the resin composition of Example B-1 according to the present invention shows not only good moldabiliy but also good clarity despite the low transesterification ratio of 7.3%, and has a shorter manufacture cycle time. In Comparison example B-2, the polyethylene naphthalate content was higher. The resin has higher Tg, but shows a low intrinsic viscosity, resulting in poor moldability. Also in Comparison Example B-3, the polyethylene naphthalate content was higher. However, the resin shows a Tg similar with that in B-1 because of the higher diethylene glycol ester terephthalate unit, and also shows poor moldability.

C. Preforms

Example C-1

Polyethylene terephthalate (intrinsic viscosity 0.85 dl/g ) and the copolymer (intrinsic viscosity 0.62 dl/g ), as the polyethylene naphthalate, consisting of 92 mole% of an ethylene-2,6-naphthalene dicarboxylate unit and 8 mole % of an ethylene terephthalate unit were fed at a constant weight rate in a weight ratio of 90 wt% to 10 wt% into a corotating twin-screw extruder TEX 65 (ex Nihon Seikosho Co., screw diameter 65mm, L/D=42 ), and molded into resin pellets under the mixing conditions that an extruder output rate was 200kg/hr, and a ratio of the extruder output rate to a screw rotation speed was 1.0. The cold crystallizing temperature of the pellets was 155°C. Then, the resin pellets were crystallized with a stirring dehumidifying drier Challenger Mini(ex Kawata Co.) at 120°C for 4 hours, and further dried at 150°C for 6 hours with a dehumidifying drier(ex Matsui Co.). Then, the dried pellets were molded into preforms of 31 g in weight with an injection molding machine P50 (ex Krupp Former Plast GmbH., 350 tons). The preform was transparent despite the low transesterification ratio of 7.6% and the content of acetaldehyde, which is a biproduct, in the constituent resin was 11.6ppm. The average residence time in the injection molding machine was 210 seconds. The preform was blow molded with a blow molding machine LB01E ( ex. Krupp Corpoplast GmbH) at a drawing temperature of 100°C to obtain transparent bottles of 500ml in net internal volume. The bottle had excellent clarity with a haze of the bottle at 0.3 mm thickness of 0.39%.

Example C-2

Resin pellets were prepared under the same conditions as in Example C-1 except that the extruder output rate was 250kg/hr. The cold crystallizing temperature of the obtained pellets was 152.7°C. Next, preforms were prepared in the same manner as in Example C-1. The preform was transparent, and had a transesterification ratio of 10% and an acetaldehyde content of 12.5ppm. Then drawing blown bottles of 500ml in net internal volume were molded in the same manner as in Example C-1, which bottles were transparent with a haze of 0.46%.

Example C-3

Preforms were prepared in the same manner as in example C-1 except that the preform molding temperature was 295°C. The preform was transparent and had a little higher acetaldehyde content of 23ppm. Then, drawing blown bottles of 500ml in net internal volume were molded in the same manner as in Example C-1, which bottles were transparent with a haze of 0.61%.

Comparison Example C-1

Resin pellets were prepared in the same manner as in Example C-2 except that the ratio of the extruder output rate to a screw rotation speed was 1.8. The cold crystallizing temperature of the obtained pellets was 133°C. Next, preforms were prepared in the same manner as in Example C-1, except that the molding temperature was 280°C. The preform was cloudy and opaque and the bottle of 500ml in net internal volume obtained by drawing blow molding under the same conditions as in Example C-1 was cloudy with a haze of 7.87%.

Comparison Example C-2

Pellets of polyethylene terephthalate (intrinsic viscosity 0.85 dl/g ) and pellets of a copolymer (intrinsic viscosity 0.62 dl/g ), as the polyethylene naphthalate, consisting of 92 mole% of an ethylene-2,6-naphthalene dicarboxylate unit and 8 mole % of an ethylene terephthalate unit were homogeneously mixed with each other in a weight ratio of 90wt% to 10wt% and dried at 150°C for 6 hrs. Then, preforms of 31 g in weight were prepared with an injection molding

machine P50 (ex Krupp Former Plast GmbH., 350 tons) at a molding temperature of 290°C with an average residence time of 210 seconds. The preform was not transparent and had a transesterification ratio of 9.2%. Using the preform, bottles of 500ml in net internal volume were drawing blow molded under the same conditions as in Example C-1. The bottle was cloudy with a haze of 10%.

Comparison Example C-3

Preforms were prepared in the same manner as in Comparison Example C-2 except that the molding temperature was 310 °C . The preform had a transesterification ratio of 24.5% and was transparent. However, the acetoaldehyde content of the preform was 40.4ppm, which was too high for the beverage bottle application. Bottles obtained by drawing blow molding the preform under the same conditions as in Example C-1 showed a haze of 0.58%.

An acetaldehyde content was measured in the following manner.

Acetaldehyde content

From the mouth part of the preform, 5.0 g of a sample was cut. The sample was extracted with 10 ml of distilled water at 160°C. After 2 hours of the extraction, about 1 ml of ethanol was added and analyzed for an acetaldehyde content by gas chromatography. GC conditions are as follows:

| | |
|---|---|
| Gas chromatography unit: | model GC7A (ex Shimadzu Seisakusho Co.) |
| Column : | PEG-6000(3.2 mm x 1.6 m) |
| column temperature | 105°C |
| injection temperature | 220°C |
| detector temperature | 220°C |
| carrier gas | nitrogen, 200kPa, splitless |
| injection volume | 2 µl. |

The results are as shown in Table 3.

Table 3

| | Mixing ratio (wt%) | | Raw material | Pellet molding conditions | | | Cold crystallizing temperature of pellets (℃) | Preform molding conditions | | Trans-esterification ratio (%) | Intrinsic viscosity (dl/g) | Acet-aldehyde concent (ppm) | Bottle haze (%) |
|---|---|---|---|---|---|---|---|---|---|---|---|---|---|
| | Polyethylene terephthalate | Polyethylene naphthalate | | Output (kg/hr) | Output rate/ Screw rotation speed ratio (kg/hr·rpm) | Average residence time of resin (sec.) | | Molding temperature (℃) | Average residence time (sec.) | | | | |
| Ex.C-1 | 90 | 10 | Resin pellet | 200 | 1 | 92 | 155 | 260 | 210 | 7.6 | 0.74 | 11.6 | 0.39 |
| Ex.C-2 | 90 | 10 | Resin pellet | 250 | 1 | 66 | 152.7 | 260 | 210 | 10 | 0.722 | 12.5 | 0.46 |
| Ex.C-1 | 90 | 10 | Resin pellet | 200 | 1 | 92 | 155 | 295 | 210 | 16 | 0.725 | 23 | 0.61 |
| Comp. Ex.C-1 | 90 | 10 | Resin pellet | 250 | 1.8 | 66 | 133 | 280 | 210 | 5 | 0.735 | 12.9 | 7.87 |
| Comp. Ex.C-2 | 90 | 10 | Direct blend | - | - | - | - | 290 | 210 | 9.2 | 0.756 | 20.5 | 10.2 |
| Comp. Ex.C-3 | 90 | 10 | Direct blend | - | - | - | - | 310 | 210 | 24.5 | 0.748 | 40.4 | 0.58 |

D. Polyester Resin Bottles

Examples D-1to D-3

Pellets of polyethylene terephthalate (intrinsic viscosity 0.83 dl/g) and pellets of a copolymer (intrinsic viscosity 0.62 dl/g ), as the polyethylene naphthalate, consisting of 92 mole% of an ethylene-2,6-naphthalene dicarboxylate unit and 8 mole % of an ethylene terephthalate unit were fed in an twin-screw extruder without drying, model TEX -65 α ( ex Nihon Seikosho Co., L/D=42, 3 vents) at a constant weight rate in the weight ratio specified in Table 1, and melt extruded at a ratio of the extruder output rate to a screw rotation speed of 1.0 kg/hr• rpm to obtain pellets having an ethylene-2,6-dinaphthalate unit of 7.6 to13.8 mole%. The temperature of the molten resin was 300°C, and the residence time of the molten resin was 1.5 minutes. Then, preforms of 31 g in weight with a maximum wall thickness of 4.0 mm were prepared from the pellets with an injection molding machine SH150A ( ex Sumitomo Heavy Industry, L/D=25). The temperature of the molten resin was 270°C in Examples D-1 and D-2, and 290°C in Example D-3, and the residence time of the molten resin was 3.5 minutes in Examples 1 to 3. From the preforms, bottles of 500ml in net internal volume were drawing blow molded with a blow molding machine LB01E (ex. Krupp Corpoplast GmbH).

Comparison Example D-1

Bottles of 500ml in net internal volume were prepared in the same manner as in Examples D-1 and 2 except that the pellets were mixed so that the ethylene-2,6-dinaphthalate unit was 3.7 mole%.

Comparison Examples D-2, D-3 and D-4

The aforesaid pellets of polyethylene terephthalate and the aforesaid pellets of polyethylene naphthalate were homogeneously mixed so that the ethylene-2,6-dinaphthalate unit was 7.6 mole%. Following dehumidifying drying, the mixed pellets were directly introduced to an injection molding machine SH150A ( ex Sumitomo Heavy Machine Industry) without advance melt kneading to mold preforms of 31 g in weight with a maximum wall thickness of 4.0 mm. The residence time of the molten resin were 3.8 minutes in Comparison Example D-2, 10.7 min in Comparison Example D-3 and 13.0 min in Comparison Example D-4, and the temperature of the molten resin was 280°C in all of these Comparison Examples. These preforms were drawing blow molded into bottles of 500ml in net internal volume with a blow molding machine LB01E (ex. Crup Foamer Plast Co.).

Table 4 shows the results of the evaluation on the transesterification ratio, acetaldehyde content, haze, and heat and pressure resistance of the obtained bottles.

Table 4

| | Mixing ratio (wt.%) | | Ethylene naphthalate unit(mol.%) | Bottle properties | | | |
|---|---|---|---|---|---|---|---|
| | Polyethylene terephthalate | Polyethylene naphthalate | | Transesterification ratio (%) | Haze (%) | Acetaldehyde content (ppm) | Heat & pressure resistance (%) |
| Example D-1 | 90 | 10 | 7.6 | 11 | 0.6 | 13 | 3 |
| Example D-2 | 82 | 18 | 13.8 | 16 | 0.7 | 16 | 2.9 |
| Example D-3 | 90 | 10 | 7.6 | 24 | 0.6 | 14 | 3.1 |
| Comparison Example D-1 | 95 | 5 | 3.7 | 9 | 0.7 | 11 | 6.5 |
| Comparison Example D-2 | 90 | 10 | 7.6 | 14 | 4.2 | 18 | - |
| Comparison Example D-3 | 90 | 10 | 7.6 | 34 | 0.7 | 43 | 3 |
| Comparison Example D-4 | 90 | 10 | 7.6 | 44 | 0.4 | 56 | 3.2 |

Bottles of Examples D-1,D-2 and D-3 had excellent clarity with a haze of 0.6-0.7% even though they had a low transesterification ratios of 11 to 24%. Also they had a low acetaldehyde content and a low change ratio of the whole volume of 2.9 to 3.1 % and is suitable for the beverage bottle application. On the other hand, the bottle in Comparison Example D-1 showed a large change ratio of the whole volume of 6.5% and poor resistance to heat and pressure, because of the low ethylene naphthalate unit content. In Comparison Examples D-2 to D-4, bottles were blow molded from the preforms obtained by injection molding directly without advance melt kneading. The bottle of Comparison Example D-2 showed poor clarity, which is considerably due to lack of melting. The bottles of Comparison Examples D-3 and D-4 showed better clarity because of the longer residence time than that of Comparison Example D-2. However, the acetaldehyde content was higher, and therefore the bottles are not suitable for the beverage bottle application.

Further, it is seen from the comparison of Example D-1 and Comparison Example D-2 that the bottles of the present invention are characteristically clear even with a lower transesterification ratio.

The acetaldehyde content and resistance to heat and pressure were measured as follows.

Acetaldehyde content

Five grams of a sample cut from a bottle was finely divided, and was extracted with 10ml of distilled water at 160°C for 2 hours. After the extraction, about 1 ml of ethanol was added and analyzed for an acetaldehyde content by gas chromatography as described above.

Resistance to heat and pressure

A bottle was filled with a carbonated water of 2.5 gas volume at 5°C and capped. The bottle was then sprayed by warm water at 66°C for 22 min. The ratio of change of the whole volume of the bottle before and after the spraying was determined. Here, the terms " gas volume" means the ratio of the volume of the dissolved carbon dioxide gas at a pressure of 1 atm at 20°C to the volume of water. The ratio of change in the whole volume was determined according to the following equation.

Ratio of change in the whole volume =(the whole volume after heating - the whole volume before heating) x 100/ the whole volume before heating

E. Self-Standing Bottles

Examples E-1, E-2 and E-3

Pellets of polyethylene terephthalate (intrinsic viscosity 0.83 dl/g) and pellets of a copolymer ( intrinsic viscosity 0.65 dl/g ), as the polyethylene naphthalate, consisting of 92 mole% of an ethlylene-2,6-naphthalene dicarboxylate unit and 8 mole % of an ethylene terephthalate unit were fed in a twin-screw extruder without drying, TEX 65$\alpha$ (ex Nihon Seikosho Co., L/D=42, 3 vents) at a constant weight rate and melt kneaded at a ratio of the extruder output rate to a screw rotation speed of 1.0 kg/hr • rpm to obtain resin pellets having the ethylene-2,6-dinaphthalate unit of 5 to 15 mole%. The temperature of the molten resin was 300 °C, and the residence time of the molten resin was 1.5 minutes. After dehumidifying-dried, the pellets were fed to an injection molding machine SH150A (ex Sumitomo Heavy Industry, L/D=25 ) to prepare preforms, which weighed 30.5g. The preforms were biaxial-drawing blow molded into bottles of 500ml in net internal volume as shown in Fig. 1 with a blow molding machine LB01E (ex. Krupp Corpoplast GmbH), wherein the temperature of the barrel part of the mold was 85°C and that of the bottom part was 20°C. Fig.2 shows an enlarged sectional view of the bottom part and Fig.3 shows a bottom plan view.

Comparison Example E-1

Bottles of 500 ml in net internal volume were prepared in the same manner as in Examples E-1, E-2 and E-3 except that the content of the ethylene-2,6-naphthalene dicarboxylate unit was 2 mole%.

Examples E-4, E-5 and E-6, Comparison Examples E-2 and E-3

Bottles of 500 ml in net internal volume were prepared in the same manner as in Examples E-1, E-2 and E-3 except that resin pellets or preforms having the ethylene-2,6-naphthalene dicarboxylate unit of 7.6 mole% were prepared according to the molding conditions shown in Table 6.

Examples E-7 to E-10, Comparison Example E-4

Bottles of 500 ml in net internal volume were prepared in the same manner as in Examples F-1 to -3 except that resin pellets or preforms having the ethylene-2,6-naphthalene dicarboxylate unit of 7.6 mole% were prepared according to the molding conditions shown in Table 7.
The following methods were used to determine a density, etc., and to evaluate the obtained bottles.

Density

A density was determined on samples cut from a mouth and neck part of a bottle and from the center of a bottom with a n-heptane-carbon tetrachloride density gradient column at 20°C.

Wall Thickness

A wall thickness of a bottle was determined by measuring a wall thickness of four circumferential points of each part of a bottle by a micrometer and averaging them.

Bottle moldability

Appearance of each 5 bottles in each of the Examples and Comparison Examples immediately after the biaxial-streching blow molding process was visually observed. When a bottle, showed a shape honestly conforming to the mold, stood uprightly on a flat surface, and was transparent throughout the bottle, it was rated as " ○ "; when a bottle leaned on a flat surface, it was rated as "△"; and a bottle, failed apparently to reproduce the shape of the mold, it was rated as" X ".

Change in appearance by heating sterilization treatment

A bottle was filled with carbonated water of 2.5 gas volume at 5°C and capped. The bottle was then sprayed by warm water at 70°C for 30 min. The appearance after the spraying was visually observed. A bottle, which showed no or little change in the appearance and stood upright was rated as " ○ "; a bottle which stood upright but showed appreciable appearance change was rated as "△"; and a bottle which changed apparently in shape and could not stand by itself was rated as "X." As used herein, the term s" gas volume" mean a ratio of the volume of dissolved carbon dioxide gas at a pressure of 1 atm at 20°C to the volume of water.

Change in the diameter of barrel by the heating

A diameter of a barrel part of a bottle was measured on each 5 bottles after the afore-mentioned heating treatment to determine the ratio of change. A bottle with a change of 2.5% or less was rated as " ○ "; a bottle with a change of 2.5 - 3.5% was rated as "△" ; and a bottle with a change above 3.5% was rated as "X."
As can be seen from Table 5, the bottle in Comparison Example E-1, of which ethylene naphthalate content was as low as 2 mole%, deformed largely after the heat sterilization treatment and lost the self-standing capability due to the deformation in the leg parts. On the other hand, the bottles in Examples E-1, E-2 and E-3, of which ethylene naphthalate contents were 5 to 15 mole%, showed good moldability, little deformation by the heating sterilization treatment to have a superior resistance to heat and pressure.

Table 5

| | | ExampleE-1 | ExampleE-2 | ExampleE-3 | Comparison ExampleE-1 |
|---|---|---|---|---|---|
| Ethylene naphthalate component | mol % | 5 | 10 | 15 | 2 |
| Transesterification ratio | % | 20 | 19 | 17 | 23 |
| Intrinsic viscosity | dl/g | 0.81 | 0.75 | 0.72 | 0.83 |
| Density at a mouth & neck part | g/cm$^3$ | 1.336 | 1.338 | 1.336 | 1.337 |
| Density at a bottom center | g/cm$^3$ | 1.338 | 1.337 | 1.338 | 1.338 |

Table 5 (continued)

| | | ExampleE-1 | ExampleE-2 | ExampleE-3 | Comparison ExampleE-1 |
|---|---|---|---|---|---|
| Bottle moldability | | ○ | ○ | ○ | ○ |
| Appearance after heated | | △ | ○ | ○ | X |
| Barrel diameter change after heated | | ○ | ○ | ○ | X |

Table 6

| | | | Ex.E-4 | Ex.E-5 | Ex.E-6 | Comp. Ex.E-2 | Comp. Ex.E-3 |
|---|---|---|---|---|---|---|---|
| Resin pellet | Extruder | | TEX-65α | TEX-65α | TEX-65α | TEX-65α | Dry blend |
| | Ratio of output rate to screw rotation speed | Kg/hr • rpm | 0.6 | 1 | 1 | 1.4 | - |
| | Temprature of molten resin | °C | 290 | 303 | 300 | 312 | - |
| | Molten resin residence time | sec | 83 | 66 | 190 | 66 | - |
| Preform | Molder | | SH-150A | SH-150A | SH-150A | SH-150A | SH-150A |
| | Molten resin residence time | sec | 90 | 90 | 90 | 90 | 250 |
| Ethylene naphthalate component | | mol % | 7.6 | 7.6 | 7.6 | 7.6 | 7.6 |
| Transesterification ratio | | % | 5 | 19 | 25 | 4 | 32 |
| Intrinsic viscosity | | dl/g | 0.81 | 0.75 | 0.72 | 0.78 | 0.74 |
| Density at a mouth & neck part | | $g/cm^3$ | 1.336 | 1.338 | 1.336 | 1.337 | 1.337 |
| Density at a bottom center | | $g/cm^3$ | 1.337 | 1.337 | 1.338 | 1.338 | 1.339 |
| Thickness of part 20 | | mm | 0.4 | 0.45 | 0.47 | 0.42 | 0.46 |
| Bottle moldability | | | ○ | ○ | ○ | ○ | ○ |
| Appearance after heated | | | △ | ○ | ○ | △ | △ |
| Barrel diameter change after heated | | | ○ | ○ | ○ | △ | X |

As shown in Table 6, the bottle in Comparison Example E-2 having a low transesterification ratio showed large changes in appearance and in a barrel diameter after the heat sterilization treatment. Meanwhile, the bottle in Comparison Example E-3 having a high transesterification ratio of 32% showed large change in a barrel diameter after the heat sterilization treatment. Also, as seen from Table 7, the bottle in Comparison Example E-4 having a low intrinsic viscosity of 0.63 dl/g was worse in moldability to have uneven thickness and showed poor resistance to heat and pressure. On the other hand, all the bottles in Examples from E-4 to E-10 having transesterification ratios of 5-30 and intrinsic viscosities of 0.70 dl/g or more showed good moldability, and little deformation by the heat sterilization treatment to have superior

resistance to heat and pressure.

Table 7

| | | | Ex.E-7 | Ex.E-8 | Ex.E-9 | Ex.E-10 | Comp. Ex.E-4 |
|---|---|---|---|---|---|---|---|
| Resin pellet | Extruder | | TEX-65α | TEX-65α | Dry blend | TEX-65α | Dry blend |
| | Ratio of output rate to screw rotation speed | Kg/hr • rpm | 1.0 | 1.0 | - | 1.1 | 0.5 |
| | Temprature of molten resin | °C | 300 | 305 | - | 302 | 295 |
| | Molten resin residence time | sec | 75 | 92 | - | 83 | 260 |
| Preform | Molder | | SH-150A | SH-150A | SH-150A | SH-150A | SH-150A |
| | Molten resin residence time | sec | 90 | 90 | 210 | 90 | 90 |
| Ethylene naphthalate component | | mol % | 7.6 | 7.6 | 7.6 | 7.6 | 7.6 |
| Transesterification ratio | | % | 14 | 19 | 23 | 21 | 10 |
| Intrinsic viscosity | | dl/g | 0.81 | 0.75 | 0.72 | 0.74 | 0.63 |
| Density at a mouth & neck part | | $g/cm^3$ | 1.336 | 1.338 | 1.336 | 1.337 | 1.337 |
| Density at a bottom center | | $g/cm^3$ | 1.337 | 1.337 | 1.338 | 1.339 | 1.338 |
| Thickness of part 20 | | mm | 0.40 | 0.45 | 0.48 | 0.46 | 0.58 |
| Bottle moldability | | | ○ | ○ | ○ | ○ | X |
| Appearance after heated | | | ○ | ○ | ○ | ○ | △ |
| Barrel diameter change after heated | | | ○ | ○ | ○ | ○ | △ |

F. Process for Preparing Self-Standing Bottles

Examples F-1, F-2 and F-3

Pellets of polyethylene terephthalate (intrinsic viscosity 0.83 dl/g) and pellets of a copolymer ( intrinsic viscosity 0.61 dl/g ), as the polyethylene naphthalate, consisting of 92 mole% of an ethylene-2,6-naphthalene dicarboxylate unit and 8 mole % of an ethylene terephthalate unit were fed into a corotating twin-screw extruder, TEX-65α (ex Nihon Seikosho Co., L/D=42, 3 vents, without drying) at an constant weight rate and melt extruded into resin pellets having an ethylene-2,6-dinaphthalete unit of 7.6 mole% at a ratio of the extruder output to a screw rotation speed of 1.0. The temperature of the molten resin was 300°C and the residence time of the molten resin was 1.5minutes. After dried, the pellets were fed to an injection molding machine SH150A (ex Sumitomo Heavy Industry, L/D=25 ) to prepare a preform as shown in Fig.4 with the cylinder temperature and the cycle time per preform shown in Table 1. The preforms were biaxial-stretching blow molded into bottles of 500ml in net internal volume as shown in Fig. 1 with a blow molding machine LB01E ( ex. Krupp Corpoplast GmbH) in a circumferenrtial stretch ratio of 2.95 and a longitudinal stretch ratio of 4.13 in all of the Examples 1 to 3. Fig.2 is an enlarged sectional view of the bottom part and Fig.3 is a bottom plan view.

Examples F-4 and F-5

Bottles of 500 ml in net internal volume were prepared in the same manner as in Examples F-1, F-2 and F-3 except that the intrinsic viscosity of the preform was 0.763dl/g, the cylinder temperature was 280°C and the cycle time per preform was 40sec, and the stretch ratios were set as shown in Table 9.

Comparison Examples F-1 and F-2

Bottles of 500 ml in net internal volume were prepared in the same manner as in Examples F-1, F-2 and F-3 except that the cylinder temperature was 300°C and the cycle time per preform was 50 sec or 60 sec.

Comparison Examples F-3, F-4 and F-5

Bottles of 500 ml in net internal volume were prepared in the same manner as in Examples F-4 and F-5 except that the stretch ratios were set as shown in Table 9.

The obtained bottles were evaluated for the resistance to heat and pressure, change in appearance, mass distribution, and bottle moldability.

Resistance to heat and pressure

A bottle was filled with carbonated water of 2.5 gas volume at 5°C and capped. The bottle was then sprayed by warm water at 66°C for 22 min. The ratio of change in the whole volume of the bottle was determined. Here, the terms " gas volume" mean a ratio of the volume of dissolved carbon dioxide gas at a pressure of 1 atm at 20°C to the volume of water. A bottle which showed the ratio of change in the whole volume of 2.5% or less was rated as " ○ "; a bottle with the ratio of 2.5-3.5 %, as "△"; and a bottle with the ratio exceeding 3.5%, as "X."

Change in appearance

The appearance after the aforesaid heat treatment was visually observed. A bottle which showed no or little change in the appearance and stood upright was rated as " ○ " ; a bottle which stood upright but showed appreciable change in the appearance was rated as "△"; and a bottle which changed apparently in shape and could not stand by itself was rated as " X."

Mass distribution

The barrel part of the bottle specified by numeral "3" in Fig 1 was cut and weighed. The ratio of the weight to the total weight of the bottle was determined.

Bottle moldability

The appearance of the bottle immediately after the biaxial-streching blow molding was visually observed. When a bottle showed the shape conforming honestly to the mold, stood upright on a flat surface, and was transparent throughout the bottle, it was rated as " ○ "; when a bottle leaned or had a cloudy part, it was rated as "△ "; and when a bottle failed apparently to reproduce the shape of the mold or impossible to be molded, it was rated as "X ".

Each ten bottles of each of the Examples and the Comparison Examples were rated in all the evaluations above and the ratings were averaged. The results of Examples F-1 to F-3, and Comparison Example F-1 and F-2 are as shown in Table 8, and the results of Examples F-4 and F-5 and Comparison Examples F-3 to F-5 are as shown in Table 9. In the overall rating , " ○ " means " excellent", "△" means "good" and " X " means "poor".

Table 8

| | | Ex.F-1 | Ex.F-2 | Ex.F-3 | Comp. Ex.F-1 | Comp. Ex.F-2 |
|---|---|---|---|---|---|---|
| Ethylene naphthalate component (mol %) | | 7.6 | 7.6 | 7.6 | 7.6 | 7.6 |
| Molding conditions | Cylinder temperature (°C) | 280 | 280 | 290 | 300 | 300 |
| | Cycle time, sec. | 40 | 50 | 50 | 50 | 60 |
| Intrinsic viscosity of preform (dl/g) | | 0.763 | 0.745 | 0.733 | 0.690 | 0.675 |
| Bottle total weight (g) | | 30.5 | 30.5 | 30.5 | 30.5 | 30.5 |
| Barrel weight (g) | | 9.5 | 9.0 | 8.7 | 7.5 | 7.0 |
| Barrel ratio (%) | | 31.1 | 29.5 | 28.5 | 24.6 | 23.0 |

Table 8 (continued)

| | Ex.F-1 | Ex.F-2 | Ex.F-3 | Comp. Ex.F-1 | Comp. Ex.F-2 |
|---|---|---|---|---|---|
| Whole volume change ratio (%) | ○ | △ | △ | X | X |
| Appearance after heated | ○ | ○ | △ | X | X |
| Overall rating | ○ | △ | △ | X | X |

Table 9

| | | Ex.F-4 | Ex.F-5 | Comp. Ex.F-3 | Comp. Ex.F-4 | Comp.Ex.F-5 |
|---|---|---|---|---|---|---|
| Ethylene naphthalate component (mol %) | | 7.6 | 7.6 | 7.6 | 7.6 | 7.6 |
| Circumferential stretch ratio | | 2.83 | 3.02 | 2.52 | 3.51 | 3.87 |
| Longitudinal stretch ratio | | 4.25 | 4.05 | 4.84 | 3.43 | 2.92 |
| Molding conditions | Cylinder temperature (°C) | 280 | 280 | 280 | 280 | 280 |
| | Cycle time, sec. | 40 | 40 | 40 | 40 | 40 |
| Intrinsic viscosity of preform (dl/g) | | 0.763 | 0.763 | 0.763 | 0.763 | 0.763 |
| Bottle moldability | | ○ | ○ | △ | △ | X |
| Whole volume change ratio (%) | | ○ | ○ | X | △ | Impossible to evaluate |
| Appearance after heated | | ○ | ○ | X | X | Impossible to evaluate |
| Overall rating | | ○ | ○ | X | X | X |

As can be seen from Table 8, the barrel weight decreases with the decreasing intrinsic viscosity of a preform. The bottles from a preform having an intrinsic viscosity of 0.70dl/g or more ( Examples F-1 to F-3) felt good when held in a hand and stood upright steadily on a flat surface. On the other hand, when the intrinsic viscosity was less than 0.70 dl/g (Comparison Examples F-1 and F-2), the wall thickness and weight of the barrel were smaller, and the touch was worse when held in a hand. Also the bottles showed a cloudy portion, which is not good in appearance.

As to the resistance to heat and pressure and the change in appearance, the ratio of change in whole volume and the deformation of the bottle increased with the decreasing intrinsic viscosity of a preform as shown in Table 8, because the bottle swelled in the radial and longitudinal directions more easily. The bottles in Examples F-1 and F-2, swelled in the bottom parts by the heat treatment in the evaluation of resistance to heat and pressure and could not stand by themselves. Meanwhile, the bottles in Examples F-1 to F-3 were excellent in the resistance to heat and pressure and showed little change in appearance.

It can be seen from Table 9 that the bottles with superior capability and stability of upright-standing could be obtained when the circumferential stretch ratio was from 3.7 to 4.3 and the longitudinal stretch ratio was from 2.7 to 3.3 (Examples F-4 and F-5). Those bottles were good also in the resistance to heat and pressure. In contrast, the bottle in Comparison Example F-3, where the longitudinal stretch ratio was less than 2.7 and the circumferential stretch ratio was bigger than 4.3, had a non-stretched portion in the bottle and was poor in moldability. In the evaluation of the resistance to heat and pressure, the bottle legs changed the shape to lose the self-standing capability and the change in the whole volume was greater than that in Examples F-4 and F-5. The bottles in Comparison Examples F-4 and F-5, where the longitudinal stretch ratio was greater than 3.3, showed a non-stretched portion and a cloudy portion and were poor in moldability. Especially, no bottle in Comparison Example F-5 could be molded. The bottle in Comparison Example F-4 was inferior in the resistance to heat and pressure to the bottles in Examples 4 and 5.

G. Process of Preparing Bottles - II

Example G-1

Polyethylene terephthalate ( intrinsic viscosity 0.83 dl/g ) and a copolymer ( intrinsic viscosity 0.50 dl/g ) consisting of 92 mole% of an ethylene-2,6-naphthalene dicarboxylate unit and 8 mole % of an ethylene terephthalate unit were fed into a corotating twin-screw extruder TEX -65 ( ex Nihon Seikosho Co., screw diameter 65mm, L/D=42) at a constant weight rate in a weight ratio of 70 wt% to 30wt% and molded into kneaded pellets. Then, the kneaded pellets were mixed with the same polyethylene terephthalate in a 50% to 50% weight ratio, and molded into preforms of 31 g in weight with an injection molding machine P50 ( ex Krupp Former Plast GmbH., 350 tons) , and then blow molded with a blow molding machine LB01E ( ex. Krupp Corpoplast Past Corp.) to obtain transparent bottle of 500ml in net internal volume. The temperature of the preform immediately before the blow molding was about 100 °C.

Examples G-2 and G-3 and Reference Examples G-1 and G-2

Kneaded pellets were prepared in the same manner as in Example G-1 except that the polyethylene terephthalate and the polyethylene naphthalate copolymer were mixed in the weight ratios listed in the second column of Table 10. Then, the kneaded pellets were mixed with the polyethylene terephthalate in the weight ratios shown in the fourth column of Table 10 to obtain bottles of 500ml in net internal volume.

Table 10

| | Melt-mixing ratio(wt%) (twin-screw extruder) | | Ethylene naphthalate unit ratio (mole%) | Pellet IV (dl/g) | Mixing ratio (wt%) (injection molding) | | Ethylene naphthalate unit ratio (mole%) | Bottle IV (dl/g) | Bottle moldability | Bottle haze (%) | Resistnace at dropping |
|---|---|---|---|---|---|---|---|---|---|---|---|
| | Polyetylene terephthalate | Polyethylene naphthalate | | | Kneaded pellet | Polyetylene terephthalate | | | | | |
| Example1 | 70 | 30 | 23.6 | 0.677 | 50 | 50 | 11.5 | 0.714 | ○ | 0.8 | ○ |
| Example2 | 60 | 40 | 32.2 | 0.636 | 40 | 60 | 11.6 | 0.731 | ○ | 0.7 | ○ |
| Example3 | 50 | 50 | 41.3 | 0.587 | 30 | 70 | 11.4 | 0.743 | ○ | 0.72 | ○ |
| Reference Example1 | 80 | 20 | 15.4 | 0.703 | 70 | 30 | 10.7 | 0.692 | × | 0.89 | × |
| Reference Example2 | 85 | 15 | 11.5 | 0.718 | 100 | 0 | 11.5 | 0.683 | × | 0.78 | × |
| | | | | | Polyethylene naphthalate | | | | | | |
| Comparison Example | | | | | 15 | 85 | 11.5 | 0.735 | ○ | 5.8 | ○ |

Comparison Example

Into an injection molding machine model P50 (ex Krupp Former Plast GmbH., 350 tons) , 85wt% of polyethylene terephthalate and 15 wt% of a polyethylene naphthalate copolymer were directly fed without being molded into kneaded pellets in advance, and molded into a preform of 31 g in weight. Then, a bottle of 500ml in net internal volume was prepared as in Example G-1.

The results of evaluation are as shown in Table 10. As seen from Table 10, all of the resins in Examples G-1 to G-3 according to the present invention are superior to those of Reference Examples G-1 and G-2 in moldability to give bottles having contours conforming to the mold. None of the bottles were broken in a drop test, which is another evidence of the superior moldability. Further, all of the bottles according to the invention have good transparency with the haze of 0.8 or lower. Meanwhile, the bottle of the Comparison Example has a high haze and is not suitable for the beverage bottle application. The clarity of the bottle may be improved with an elongated melting time, which in turn makes the high-speed production of bottles impractical. Here, the resistance at dropping was determined as follows.

Resistance at dropping

This test was performed on each 10 bottles from each Example. Twenty four hours after the molding the bottle was filled with carbonate water of 4.0 gas volume, and kept at 5°C for 24 hours, and then dropped from a 2.0 m height with the bottom part being down. In table 10, a case where none of the 10 bottles was broken was rated as "○ " , and a case where even one bottle was broken was rated as "X".

Field of the Industrial Application

As described above, the resin composition and the bottles therefrom according to the invention are suitable for the beverage bottle application and the present process for preparing the bottle can be advantageously practiced in high-speed production facility.

## Claims

1. A process for preparing a polyester resin composition, characterized by melt-kneading (A) polyethylene terephthalate with (B) polyethylene naphthalate in a proportion of the ethylene naphthalate unit to a total of (A) and (B) of from 5 to 15 mole% with a kneading extruder in a ratio of an extruder output rate to a screw rotation speed of 0.1 to 1.4kg/hr • rpm.

2. A polyester resin composition comprising (A) polyethylene terephthalate and (B) polyethylene naphthalate, characterized in that a proportion of the ethylene naphthalate unit to a total of (A) and (B) is from 5 to 15 mole%, and that a transesterification ratio is 20% or less, or a cold crystallizing temperature, determined by differential scanning calorimetry, is 140°C or higher.

3. A polyester resin composition prepared by melt-kneading (A) polyethylene terephthalate and (B) polyethylene naphthalate, characterized in that

   (a) a proportion of the ethylene naphthalate unit to a total of (A) and (B) is from 5 to 15 mole%,
   (b) a transesterification ratio is 20% or less, and
   (c) a content of the diethylene glycol ester unit in (A) polyethylene terephthalate is 1.5 mole% or less based on (A).

4. The polyester resin composition according to claim 3, wherein the content of the diethylene glycol ester unit is 1.5 mole% or less based on the total of (A) and (B).

5. The polyester resin composition according to any one of claims 2-4, wherein (B) polyethylene naphthalate comprises an ester component or components other than the ethylene naphthalate component in a proportion of 15 mole% or less.

6. The polyester resin composition according to any one of claims 2-5, wherein (B) polyethylene naphthalate comprises an ester component or components other than the ethylene naphthalate component in a proportion of 8 mole% or less.

**7.** The polyester resin composition according to any one of claims 2-6, wherein (B) polyethylene naphthalate is polyethylene 2,6-naphthalene dicarboxylate.

**8.** The polyester resin composition according to any one of claims 2-7, wherein said composition is molded in a form of pellets.

**9.** A polyester resin preform prepared by injection molding the polyester resin composition described in any one of claims 2-8.

**10.** A polyester resin bottle, characterized in that said bottle comprises (A) polyethylene terephthalate and (B) polyethylene naphthalate in a proportion of the ethylene naphthalate unit to a total of (A) and (B) of from 5 to 15 mole%, that a haze at a barrel part of said bottle is 3% or less, and that a content of acetaldehyde is 20ppm or less.

**11.** The polyester resin bottle according to claim 10, wherein a transesterification ratio of the polyester resin is 27% or less.

**12.** A polyester self-standing bottle prepared by biaxial-stretch blow molding, characterized in that the bottom part of said bottle has a plurality of leg parts extending below from a hemispherically curved bottom face with said leg parts being disposed at an approximately regular interval along the circumference of the bottom face, and that said polyester resin bottle comprises a polyester resin composition comprising (A) polyethylene terephthalate and (B) polyethylene naphthalate in a proportion of the ethylene naphthalate unit to a total of (A) and (B) of from 5 to 15 mole%, and having a transesterification ratio of 5 to 30 % and an intrinsic viscosity of 0.70 dl/g or larger.

**13.** The self-standing bottle according to claim 12, wherein a mouth and neck part and a center part of the bottom face of said self-standing bottle are of a substantially noncrystalline state, and have a density of 1.330 to 1.350g/$cm^3$.

**14.** The self-standing bottle according to claim 12 or 13, wherein a wall thickness in a barrel part of said bottle is 0.5mm or less or a weight per unit net internal volume of said bottle is 0.055 to 0.065g/ $cm^3$.

**15.** The bottle according to any one of claims 10-14, wherein (B) polyethylene naphthalate comprises an ester component or components other than the ethylene naphthalate component in a proportion of 15 mole% or less.

**16.** The bottle according to any one of claims 10-15, wherein (B)polyethylene naphthalate comprises an ester component or components other than the ethylene naphthalate component in a proportion of 8 mole% or less.

**17.** The bottle according to any one of claims 10-16, wherein (B) polyethylene naphthalate is polyethylene 2,6-naphthalene dicarboxylate.

**18.** A process for preparing a self-standing bottle comprising a step of biaxial-stretch blow molding a preform in a circumferential stretch ratio of 3.7 to 4.3 and a longitudinal stretch ratio of 2.7 to 3.3, characterized in that said preform comprises a polyester resin composition comprising (A) polyethylene terephthalate and (B) polyethylene naphthalate in a proportion of the ethylene naphthalate unit to a total of (A) and (B) of from 5 to 15 mole%, and having an intrinsic viscosity of 0.70 dl/g or larger.

**19.** A process for preparing a polyester bottle from a polyester resin composition comprising polyethylene terephthalate and polyethylene naphthalate, characterized in that use is made of a resin composition prepared by steps of

(1)melt-mixing polyethylene terephthalate and polyethylene naphthalate in a proportion of the ethylene naphthalate component to a total of the polyethylene terephthalate and the polyethylene naphthalate of 20 to 50 mole%, and
(2)melt-mixing the product of step (1) with an additional amount of polyethylene terephthalate so as to attain a proportion of the ethylene naphthalate component of from 5 to 15 mole%.

**20.** The process for preparing a polyester bottle according to claim 19, wherein a preform is prepared by injection molding in step (2).

**21.** The process for preparing a polyester bottle according to any one of claims 18-20, wherein the polyethylene naphthalate comprises an ester component or components other than the ethylene naphthalate component in a proportion of 15 mole% or less.

**22.** The process for preparing a polyester bottle according to any one of claims 18-21, wherein the polyethylene naphthalate comprises an ester component or components other than the ethylene naphthalate component in a proportion of 8 mole% or less..

**23.** The process for preparing a polyester bottle according to any one of claims 18-22, wherein the polyethylene naphthalate is polyethylene 2,6-naphthalene dicarboxylate.

**24.** A polyester resin composition obtained by step (1) of any one of claims 19-23, wherein the proportion of the ethylene naphthalate unit to the total of the polyethylene terephthalate and the polyethylene naphthalate is from 20 to 50 mole%, and the intrinsic viscosity is from 0.55 to 0.69 dl/g.

Fig. 1

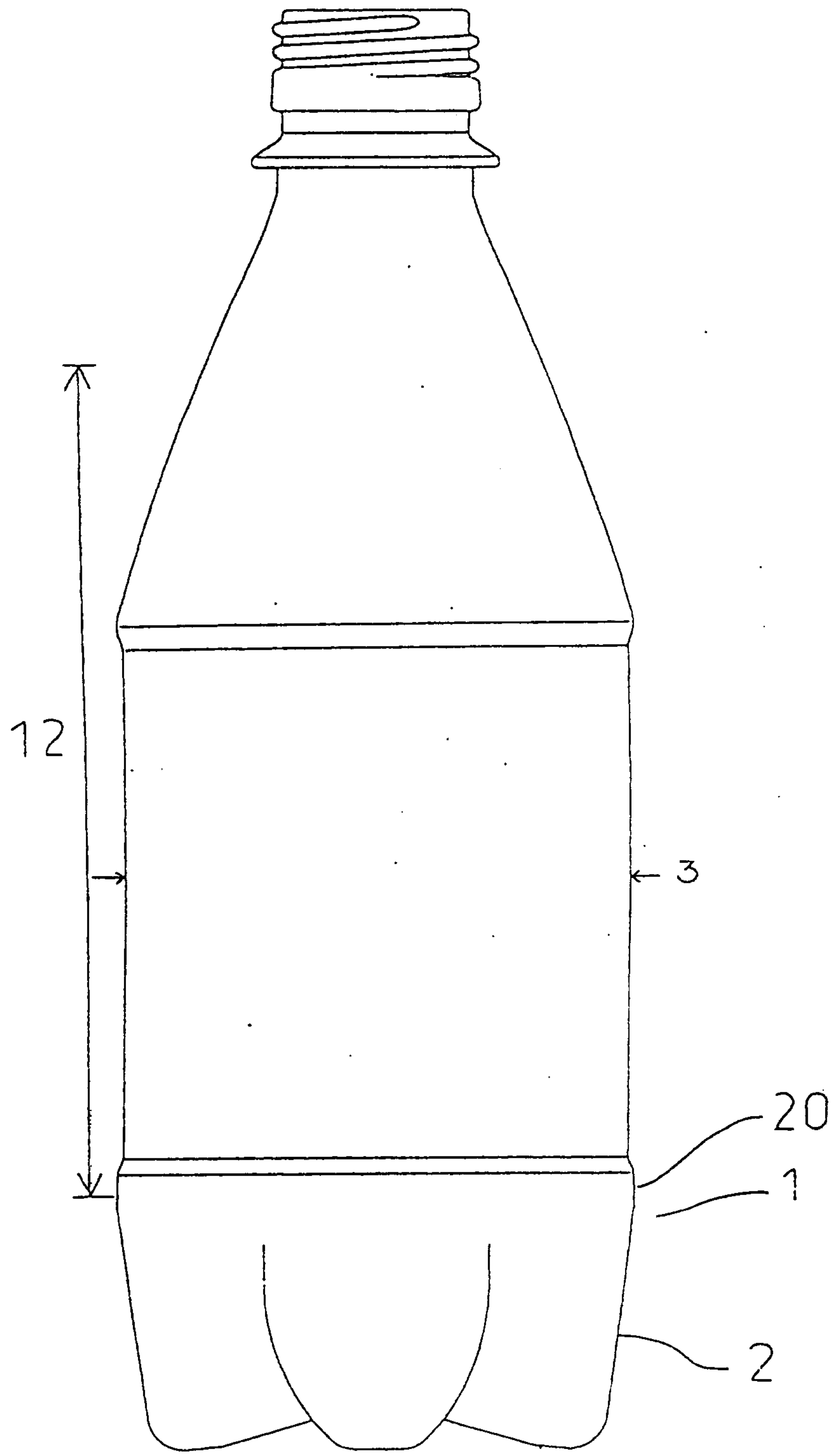

Fig. 2

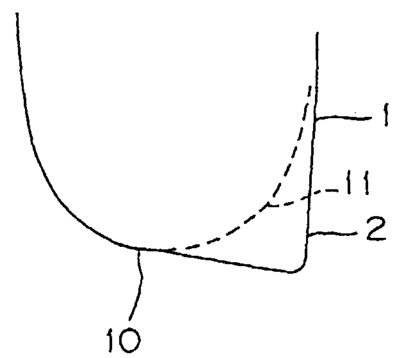


Fig. 3

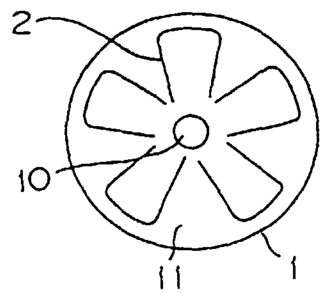


Fig. 4

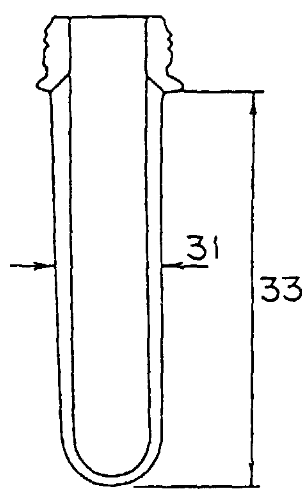

## INTERNATIONAL SEARCH REPORT

International application No.
PCT/JP98/03028

A. CLASSIFICATION OF SUBJECT MATTER
Int.Cl$^6$ C08L67/02, C08J3/20, B29B11/08, B29C49/06, B65D1/02

According to International Patent Classification (IPC) or to both national classification and IPC

B. FIELDS SEARCHED

Minimum documentation searched (classification system followed by classification symbols)
Int.Cl$^6$ C08L67/00-08, C08J3/20, B29B7/00-94, B29B11/00-16, B29C49/00-80, B65D1/02-08

Documentation searched other than minimum documentation to the extent that such documents are included in the fields searched
Jitsuyo Shinan Koho 1926-1996 Toroku Jitsuyo Shinan Koho 1994-1998
Kokai Jitsuyo Shinan Koho 1971-1998 Jitsuyo Shinan Toroku Koho 1996-1998

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X | JP, 9-52277, A (A.K. Technical Laboratory, Inc.), 25 February, 1997 (25. 02. 97), Claims ; Par. Nos. [0032], [0034] ; Examples & EP, 758578, A1 & AU, 9662069, A & ZA, 9606880, A & CA, 2183203, A & TW, 317530, A & KR, 97010048, A & MX, 9603357, A1 & BR, 9604106, A | 1 |
| Y | JP, 9-86528, A (Mitsubishi Plastic Industries Ltd.), 31 March, 1997 (31. 03. 97), Claims ; Examples (Family: none) | 1-24 |
| Y<br>A | JP, 8-47979, A (Mitsui Petrochemical Industries, Ltd.), 20 February, 1996 (20. 02. 96), Claims ; Par. No. [0036] ; Examples (Family: none) | 10-24<br>1-9 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 September, 1998 (18. 09. 98) | 29 September, 1998 (29. 09. 98) |
| Name and mailing address of the ISA/ Japanese Patent Office | Authorized officer |
| Facsimile No. | Telephone No. |

Form PCT/ISA/210 (second sheet) (July 1992)

INTERNATIONAL SEARCH REPORT

International application No.
PCT/JP98/03028

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP, 6-172549, A (Kao Corp.),<br>21 June, 1994 (21. 06. 94),<br>Claims ; Par. No. [0001] ; Examples ; Comparative Example 1 (Family: none) | 10-24<br>1-9 |
| Y<br>A | JP, 3-43425, A (Teijin Ltd.),<br>25 February, 1991 (25. 02. 91),<br>Claims ; Examples (Family: none) | 10-24<br>1-9 |
| Y<br>A | JP, 8-239562, A (Mitsubishi Chemical Corp.),<br>17 September, 1996 (17. 09. 96),<br>Claims ; Par. No. [0049] ; Examples (Family: none) | 2-9<br>1, 10-24 |
| A | JP, 3-87237, A (Mitsui Petrochemical Industries, Ltd.),<br>12 April, 1991 (12. 04. 91),<br>Claims ; Examples<br>& EP, 415728, A2 & CA, 2024330, A<br>& KR, 9406645, B1 & US, 5556675, A<br>& US, 5571584, A & DE, 69029623, E<br>& US, 5641548, A | 1-24 |
| A | JP, 50-122549, A (Teijin Ltd.),<br>26 September, 1975 (26. 09. 75),<br>Claims ; Examples (Family: none) | 1-24 |
| P, A | JP, 9-302205, A (Teijin Ltd.),<br>25 November, 1997 (25. 11. 97),<br>Claims ; Examples (Family: none) | 1-24 |
| P, A | JP, 9-194701, A (Mitsubishi Plastic Industries Ltd.),<br>29 July, 1997 (29. 07. 97),<br>Claims ; Par. No. [0032] ; Examples (Family: none) | 1-24 |

Form PCT/ISA/210 (continuation of second sheet) (July 1992)